# EUROPEAN PATENT APPLICATION

(11) **EP 4 851 970 A1**
(43) Date of publication of application: **09.12.2026**
(21) Application number: 26180597.2
(22) Date of filing: 22.05.2026
(51) Int. Cl.: G08G 5/21, B64C 39/02, G08G 5/22, G08G 5/25, G08G 5/26, G08G 5/32, G08G 5/34, G08G 5/54, G08G 5/55, G08G 5/56, G08G 5/57, G08G 5/58, G08G 5/59, G08G 5/72, G08G 5/74, G08G 5/76

(54) **APPARATUSES, COMPUTER-IMPLEMENTED METHODS, AND COMPUTER PROGRAM PRODUCTS FOR DETERMINING VEHICLE STATUSES**

(30) Priority: 26.05.2025 IN 202511050337; 17.07.2025 US 202519272502
(71) Applicant: Honeywell International Inc., Charlotte, NC 28202 (US)
(72) Inventor: PULICHERLA, Chandra Sekhar, Charlotte, 28202 (US); YELISETTY, Sree Ramya, Charlotte, 28202 (US); KARPURAM, Sai Kumar, Charlotte, 28202 (US); FESKO, Brandon, Charlotte, 28202 (US); ALIMI, Sandeep Kumar, Charlotte, 28202 (US)
(74) Representative: Haseltine Lake Kempner LLP

(57) **Abstract**

Embodiments of the disclosure provide techniques for determining vehicle statuses and managing vehicle behaviors. In the context of a method, the method includes receiving a bitstring from an automatic dependent surveillance-broadcast (ADS-B) system of a vehicle, wherein: the bitstring is based on at least one input to a graphical user interface (GUI) on at least one computing device associated with an operator of the vehicle; generating, based on the bitstring, at least one score in accordance with at least one condition category; determining, based on the at least one score, at least one status of the vehicle in accordance with at least one condition category; generating a landing instruction for the vehicle pursuant to a landing site based on the at least one status; and provisioning the landing instruction to the at least one computing device to cause the vehicle to move in accordance with the landing instruction.

## Description

### CROSS REFERENCE TO RELATED APPLICATIONS

This application claims the benefit of and priority to India Patent Application No. 202511050337, filed May 26, 2025, entitled "APPARATUSES, COMPUTER-IMPLEMENTED METHODS, AND COMPUTER PROGRAM PRODUCTS FOR DETERMINING VEHICLE STATUSES," the disclosure of which is incorporated herein by reference in its entirety.

### TECHNOLOGICAL FIELD

Embodiments of the present disclosure are generally directed to techniques for determining a status of a vehicle and controlling behavior of one or more vehicles based on the status.

### BACKGROUND

Challenges to vehicle and vehicle traffic management may arise as vehicle traffic density increases, especially in high density or emergency scenarios. For example, as vehicle traffic scales, passenger emergencies, component failures, overlapping estimated time of arrival (ETA), adverse weather conditions, and/or the like, may introduce significant complexities to control processes of vehicle operators and prioritization processes of landing site administrators. Existing approaches to determining vehicle status and managing vehicle behaviors may rely upon verbal communication between vehicle operators and landing site administrators. As a result, instances of high vehicle traffic density may exceed the capacity of current techniques to safely and efficiently coordinate vehicle movements.

Applicant has discovered various technical problems associated with determining vehicle statuses and managing vehicle behaviors. Through applied effort, ingenuity, and innovation, Applicant has solved many of these identified problems by developing the embodiments of the present disclosure, which are described in detail below.

### BRIEF SUMMARY

In general, embodiments of the present disclosure herein provide for vehicle status determination and vehicle management, including emergency response and landing prioritization. For example, embodiments of the present disclosure are configured to determine vehicle statuses based at least in part on bitstreams from ADS-B systems. Various embodiments are further configured to modify ADS-B systems to encode representations of vehicle statuses within segments of a bitstring. In some embodiments, the present apparatuses, methods, and computer program products are configured to generate priority rankings of vehicles based at least in part on vehicle statuses determined from ADS-B system broadcast. The apparatuses, methods, and computer program products may generate landing instructions based at least in part on the priority ranking to control an order by which the vehicles land at one or more landing sites. In some embodiments, the apparatuses, methods, and computer program products cause rendering of emergency response interfaces based on vehicle statuses, which may enable vehicle operators to access and customize displays of emergency response information.

Other implementations for vehicle status determination and vehicle control will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for vehicle control is provided. The computer-implemented method is executable utilizing any of a myriad of computing device(s) and/or combinations of hardware, software, firmware. In some example embodiments an example computer-implemented method includes receiving a bitstring from an automatic dependent surveillance-broadcast (ADS-B) system of a first vehicle, wherein: the bitstring is based on at least one input to a graphical user interface (GUI) on at least one computing device associated with an operator of the first vehicle; generating, based at least in part on the bitstring, at least one score in accordance with at least one condition category; determining, based at least in part on the at least one score, at least one status of the first vehicle in accordance with the at least one condition category; generating a landing instruction for the first vehicle pursuant to a landing site based at least in part on the at least one status; and provisioning the landing instruction to the at least one computing device to cause the first vehicle to move in accordance with the landing instruction.

In some embodiments, the method further comprises obtaining at least one status of at least one additional vehicle in accordance with the at least one condition category, wherein: the at least one status of the at least one additional vehicle is based at least in part on a bitstring obtained from an ADS-B system of the at least one additional vehicle; generating, based at least in part on the at least one status of the first vehicle and the at least one status of the at least one additional vehicle, a priority ranking of the first vehicle and the at least one additional vehicle for landing at the landing site; and generating the landing instruction for the first vehicle based at least in part on the priority ranking. In some embodiments, the at least one condition category comprises at least one of emergency information, weather, battery level, vehicle classification, or estimated time of arrival (ETA).

In some embodiments, the at least one condition category comprises emergency information; and the method further comprises: in response to determining that, based at least in part on the at least one score, the first vehicle is experiencing at least one of a system failure, a medical emergency, or an extreme weather condition, assigning the first vehicle ahead of the at least one additional vehicle in the priority ranking; and in accordance with the landing instruction and the priority ranking, causing the first vehicle to land at the landing site before the at least one additional vehicle. In some embodiments, the at least one condition category comprises battery level; and the method further comprises: based at least in part on the at least one score and the at least one status of the at least one additional vehicle, determining that a respective battery level of the at least one additional vehicle is less than a battery level of the first vehicle; in response to determining that the respective battery level of the at least one additional vehicle is less than the battery level of the first vehicle, assigning the at least one additional vehicle ahead of the first vehicle in the priority ranking; and in accordance with the landing instruction and the priority ranking, causing the first vehicle to land at the landing site after a landing of the at least one additional vehicle at the landing site.

In some embodiments, the at least one condition category comprises weather; and the method further comprises: based at least in part on the at least one score, determining that the first vehicle is experiencing a severe weather condition; in response to determining that the first vehicle is experiencing the severe weather condition, assigning the first vehicle ahead of the at least one additional vehicle in the priority ranking; and in accordance with the landing instruction and the priority ranking, causing the first vehicle to land at the landing site before the at least one additional vehicle. In some embodiments, the at least one condition category comprises vehicle classification; and the method further comprises: based at least in part on the at least one score, determining that a vehicle classification of the first vehicle is at least one of privileged occupant, surveillance, or ambulance; assigning the first vehicle ahead of the at least one additional vehicle in the priority ranking based at least in part on the vehicle classification of the first vehicle; and in accordance with the landing instruction and the priority ranking, causing the first vehicle to land at the landing site before the at least one additional vehicle.

In some embodiments, the at least one status of the first vehicle and the at least one status of the at least one additional vehicle are equivalent in the at least one condition category; and the method further comprises: generating, based at least in part on the bitstring from the first vehicle, a first ETA of the first vehicle to the landing site; obtaining a second ETA of the at least one additional vehicle to the landing site, the second ETA being based at least in part on the bitstring from the ADS-B system of the at least one additional vehicle; and generating the priority ranking further based at least in part on first ETA and the second ETA.

In some embodiments, the method further comprises causing an update to the GUI based at least in part on the at least one input, wherein: the updated GUI comprises at least one travel pathway and at least one of a nearest hospital location, a nearest landing site location, a radio communication frequency, a weather report, or an availability of a landing site. In some embodiments, the at least one condition category comprises a first condition category and a second condition category; and the method further comprises generating a first score based at least in part on a first segment of the bitstring and a second score based at least in part on a second segment of the bitstring; determining a status of the first vehicle in the first condition category based at least in part on the first score and a status of the first vehicle in the second condition category based at least in part on the second score; and generating the landing instruction based at least in part on the status of the first vehicle in the first condition category and the status of the first vehicle in the second condition category.

In some embodiments, the method further comprises generating a third score based at least in part on a third subset of the bitstring; determining an ETA of the first vehicle at the landing site based at least in part on the third score; and generating the landing instruction further based at least in part on the ETA. In some embodiments, the at least one condition category comprises emergency information; and the method further comprises, in response to a determination that, based at least in part on the at least one score, the first vehicle is experiencing at least one of a system failure, a medical emergency, or an extreme weather condition, provisioning an alert to at least one external system.

In some embodiments, the at least one condition category comprises emergency information; and the method further comprises based at least in part on the at least one score, determining that the first vehicle is experiencing at least one of a system failure, a medical emergency, or an extreme weather condition; generating the landing instruction based at least in part on a determination that a capacity of the landing site fails to meet a predetermined threshold; and provisioning the landing instruction to the at least one computing device to cause the first vehicle to land at a second landing site.

In some embodiments, the method further comprises generating, based at least in part on the bitstring, an ETA of the first vehicle to the landing site; generating an ETA of a second vehicle to the landing site based at least in part on a second bitstring from an ADS-B system of the second vehicle; in response to a determination that the ETA of the second vehicle is less than the ETA of the first vehicle, generating a second landing instruction; and provisioning the second landing instruction to the first vehicle to cause the first vehicle to land at a second landing site. In some embodiments, the at least one condition category comprises vehicle classification; the at least one status of the first vehicle comprises a payload of the first vehicle; and the method further comprises, in response to a determination that the payload of the first vehicle comprises at least one of a privileged passenger or a patient passenger, modifying a priority ranking of vehicles associated with the landing site to prioritize the first vehicle for landing at the landing site.

In some embodiments, the method further comprises generating a priority ranking for the landing site based at least in part on the at least one status of the first vehicle and a respective status of an additional plurality of vehicles; and provisioning the priority ranking to the first vehicle and the additional plurality of vehicles to cause the first vehicle and the additional plurality of vehicles to land at the landing site in an order pursuant to the priority ranking. In some embodiments, the method further comprises receiving a plurality of bitstrings from the ADS-B system of the first vehicle; determining, based on respective subsets of the plurality of bitstrings, a plurality of symbols; and rendering, on a display of a second computing device, at least one text string based at least in part on the plurality of symbols. In some embodiments, the method further comprises determining, based at least in part on the plurality of symbols, a status of at least one of a component of the first vehicle or a passenger aboard the first vehicle, wherein: the at least one text string indicates the status of the at least one of a component of the vehicle or a passenger aboard the first vehicle.

In accordance with another aspect of the present disclosure, a computing apparatus for vehicle control is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein. In some embodiments, the vehicle comprises the computing apparatus.

In accordance with another aspect of the present disclosure, a computer program product for vehicle control is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a network environment that may be specially configured within which embodiments of the present disclosure may operate.
FIG. 2 illustrates block diagrams of example apparatuses that may be specially configured in accordance with at least some example embodiments of the present disclosure.
FIG. 3 illustrates an example data architecture in accordance with at least some example embodiments of the present disclosure.
FIG. 4 illustrates an example dataflow for vehicle status determination and landing prioritization in accordance with at least some example embodiments of the present disclosure.
FIG. 5 illustrates an example workflow for vehicle status determination and landing prioritization in accordance with at least some example embodiments of the present disclosure.
FIG. 6 shows an example workflow for vehicle status determination and landing prioritization in accordance with at least some example embodiments of the present disclosure;
FIG. 7 illustrates an example dataflow for rendering an emergency response interface on a display of a computing device in accordance with at least some example embodiments of the present disclosure.
FIG. 8 illustrates an example workflow for generating an emergency response interface in accordance with at least some example embodiments of the present disclosure.
FIG. 9 illustrates an example GUI that may be rendered on a computing device in accordance with some embodiments of the present disclosure.
FIG. 10 illustrates an example GUI that may be rendered on a computing device in accordance with some embodiments of the present disclosure.
FIG. 11 illustrates a flowchart depicting operations of an example process for determining vehicle statuses in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Embodiments of the present disclosure provide a myriad of technical advantages in the technical field of vehicle status determination and vehicle management. Increases in vehicle traffic density and vehicle types introduce challenges to safe and effective management of landing sites. For example, existing approaches to landing site management may be unable to function effectively in complex landing scenarios introduced by high levels of vehicle traffic and emergency situations, such as medical events, system failures, low battery levels, and/or the like. Thus, vehicle operations may face delays and safety risks due to lack of landing prioritization efficiency and vehicle status awareness. For example, existing landing prioritization strategies may rely upon verbal communication between vehicle operators and landing site administrators, thereby limiting the scalability of vehicle status tracking. As a result, such approaches demonstrate limited effectiveness in generating and adapting landing schedules to complex traffic and emergency scenarios.

Embodiments of the present disclosure overcome the technical challenges of determining vehicle statuses, performing landing prioritization operations, and providing vehicle operators with access to landing instructions and emergency response resources. For example, the present methods, apparatuses, and computer program products are configured to modify ADS-B broadcasting frameworks to enable determination of vehicle statuses from broadcasted bitstreams. In doing so, ADS-B systems may be utilized to indicate current vehicle statuses, such as emergency conditions, weather, battery level, vehicle classification, and/or the like. In this manner, factors for generating effective landing instructions may be obtained without verbal communication between vehicle operators and landing site administrators. Further, the scalability and real-time accuracy of vehicle status determination processes may be improved compared to existing approaches.

In various embodiments, the present methods, apparatuses, and computer program products generate priority rankings for landing multiple vehicles based at least in part on ADS-B-broadcasted vehicle statuses. In doing so, the methods, apparatuses and computer program products may adapt landing instructions in real-time to optimize for efficient vehicle direction and emergency condition. For example, vehicle statuses may be obtained for multiple vehicles simultaneously and in real-time, enabling informed landing prioritization and ensuring timely and safe landings. Additionally, various embodiments of the present methods, apparatuses, and computer program products enable generating and rendering of emergency response interfaces comprising customized resources for safely landing a vehicle in accordance with emergency conditions. By these techniques, the various embodiments may improve vehicle traffic management and emergency response processes for landing site administrators and vehicle operators.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with advanced air mobility (AAM).

"AAM" refers to advanced air mobility, which includes all aerial vehicles and functions for aerial vehicles that are capable of performing vertical takeoff and/or vertical landing procedures. Non-limiting examples of AAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Travel pathway" refers to a data construct that indicates an actual or planned course of travel between two or more locations. For example, a travel pathway may indicate a planned course of travel for a vehicle between an origin point and a destination point. The travel pathway may be embodied any number of computer-readable storage media, such as one or more digital files. In some contexts, a travel pathway includes a track, route, flight path, flight plan, course, movement trajectory, bearing, float plan, and/or the like. As one example, a travel pathway may refer to a flight path that indicates a trajectory of air travel for an aerial vehicle between a first location and a second location. In some embodiments, the travel pathway includes a plurality of portions that define a course of travel between locations. In some embodiments, a travel pathway includes metadata including identifying information for one or more vehicles associated with the travel pathway, a target or expected travel time, a target resource cost of traversing the travel pathway, and/or the like.

"Landing instruction" refers to any data that may be provided to an operator of a vehicle to instruct navigation of a vehicle to a landing site. For example, landing guidance may include a trajectory for steering a vehicle to a landing site. In another example, landing guidance may include a landing angle, landing speed, estimated landing timestamp, an interval between a current timestamp and an estimated landing timestamp, and/or the like. As another example, landing guidance may include a position of a vehicle within a queue of vehicles, indicating a priority ranking of the vehicles for landing at a landing site. As another example, landing guidance may include an instruction to land at one or more alternative landing sites instead of an initial landing site. As another example, landing guidance may include information associated with the landing site, such as availability of maintenance or component services, fueling or charging services, medical assistance services, security services, fire suppression services, and/or the like. In some embodiments, landing guidance is rendered on a display of a computing device associated with controlling a vehicle. For example, a GUI may be rendered on a display onboard a vehicle (e.g., a cockpit display, in some contexts) or a display of a control station associated with controlling a vehicle.

As used herein, the term "ADS-B system" refers to systems configured to obtain vehicle information from onboard avionics or sensors and broadcast the information via radio transmission. For example, an ADS-B system may automatically obtain and broadcast a current position of the vehicle within which the ADS-B system is located. In doing so, the ADS-B system may enable others to receive radio transmissions by which the current position, velocity, and/or altitude of the vehicle may be determined. The bitstreams broadcasted by the ADS-B system may further encode a unique identifier associated with the vehicle, such as an aircraft registration, and/or the like. The ADS-B may include a computing device configured to obtain position, speed, and/or altitude from one or more onboard systems or sensors. The ADS-B may further include a transmitter, such as a transponder, configured to broadcast a bitstream within which the data is encoded. In various embodiments, the present systems, methods, and computer program products enhance landing prioritization and vehicle monitoring techniques at least in part by configuring an ADS-B system to encode a status of the vehicle in accordance with one or more condition categories.

As used herein "bitstream" refers to a stream of data in binary form. For example, an ADS-B system may generate and broadcast a radio signal that encodes a binary sequence, which embodies a bitstream. An example bitstream from a typical ADS-B system may include subsets of binary values representing vehicle position, vehicle velocity, vehicle altitude, and vehicle identifier. In various embodiments, the present systems, methods, and computer program products extend the functionality of the ADS-B system by enabling representation of vehicle statuses in additional subsets of a bitstream. In doing so, the present techniques may enhance processes for communicating vehicle information, enabling increased vehicle awareness and improving landing prioritization and emergency response procedures.

As used herein "vehicle status" refers to a current property or characteristic of a vehicle, its occupants, or an environment proximate to the vehicle. For example, vehicle statuses may include properties of vehicle components, such as batteries, engines, control systems, life support systems, communication systems, and/or the like. As another example, vehicle statuses may include occupant health, occupant behavior, occupant temperament, occupant quantity, occupant classification or affiliation, and/or the like. As another example, vehicle statuses may include precipitation type, wind velocity, wind direction, severe turbulence, low visibility, and/or the like. As another example, a vehicle status may include a distance, time, and/or the like between the vehicle and a physical area or object, such as a landing site.

As used herein "condition category" refers to a classification of vehicle statuses. For example, condition categories may include emergency information, weather, battery level, vehicle classification, estimated time of arrival, and/or the like. In some embodiments, vehicle statuses within a condition category may be associated with scores. For example, a condition category of battery level includes may include battery level ranges (e.g., 75-100% available, 50 to 75% available, 25-50% available, 0-25% available, and/or the like) or absolute battery levels (e.g., 25%, 50%, 100%, and/or the like). The battery level ranges or absolutely battery levels may be associated with respective scores, such as 0, 1, 2, and 3.

In some embodiments, a condition category of emergency information may include vehicle statuses related to occupant health, vehicle system failures, extreme weather, lack of emergency, and/or the like. In some embodiments, a condition category of weather includes weather severities, such as good weather, moderate weather, bad weather, extreme weather, and/or the like. In some embodiments, a condition category of vehicle classification includes vehicles statuses related to a payload type of a vehicle (e.g., persons, goods, and/or the like), a quantity of the payload (e.g., quantity of passengers, weight of goods, and/or the like), a classification of the payload (e.g., privileged individual, sensitive goods, and/or the like), or a purpose or role of the vehicle (e.g., taxi, ambulance, surveillance, police, and/or the like).

### Example Systems and Apparatuses of the Disclosure

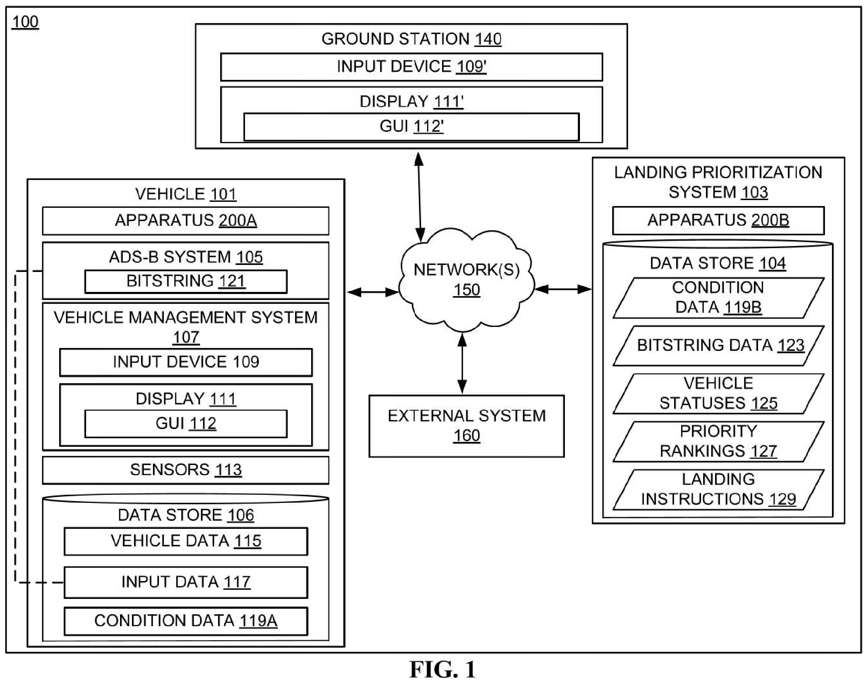

FIG. 1 illustrates a block diagram of a network environment that may be specially configured within which embodiments of the present disclosure may operate. Specifically, FIG. 1 depicts an example networked environment 100. As illustrated, the networked environment 100 includes one or more vehicles 101, a landing prioritization system 103, one or more ground stations 140, one or more external systems 160, and/or the like.

In various embodiments, the vehicle 101 includes an apparatus 200A and the landing prioritization system 103 includes an apparatus 200B configured to perform various functions and actions related to enacting techniques and processes described herein for encoding vehicle statuses into ADS-B bitstrings, determining vehicle statuses from ADS-B bitstrings, and generating landing instructions based thereon. For example, the apparatus 200A may cause an ADS-B system 105 to generate a bitstring 121 based at least in part on user input, vehicle data, and/or the like, that indicates a status of the vehicle 101 (e.g., emergency conditions, weather encounters, battery levels, vehicle information, ETA, and/or the like). The apparatus 200A may cause the ADS-B system 105 to broadcast the bitstring along one or more radiofrequencies, enabling a landing prioritization system 103 to receive the bitstring (e.g., represented as bitstring data 123 once received). The apparatus 200B may generate one or more scores in one or more condition categories based at least in part on the bitstring data. The apparatus 200B may determine, based at least in part on the one or more scores, one or more statuses of the vehicle in accordance with the one or more condition categories. In this manner, the apparatuses 200A, 200B may carry out operations described herein to communicate vehicle statuses via ADS-B broadcast.

The apparatus 200B may generate a landing instruction for the vehicle 101 based at least in part on the vehicle status. For example, in response to the vehicle status indicating an emergency condition aboard the vehicle, the apparatus 200B may prioritize the vehicle 101 to land at a landing site ahead of other queued vehicles and provision to the vehicle 101 a landing instruction that causes the vehicle 101 to land at the landing site in accordance with a priority ranking of the vehicles. In this manner, the landing prioritization system 103 may determine and implement landing prioritization strategies based at least in part on respective vehicle statuses derived from the ADS-B broadcasts of one or more vehicles 101.

In some embodiments, the vehicle 101 includes the apparatus 200A, an ADS-B system 105, a vehicle management system 107, one or more data stores 106, one or more sensors 113, and/or the like. In various embodiments, the apparatus 200A is configured to perform operations and carry out functionality described herein to enable the landing prioritization system 103 to determine one or more statuses of the vehicle 101. For example, the apparatus 200A may perform a landing prioritization method to communicate one or more vehicle statuses to a landing prioritization system 103 via the ADS-B system 105. The apparatus 200A may receive a landing instruction based on the vehicle status and cause navigation of the vehicle 101 in accordance with the landing instruction. In some embodiments, the apparatus 200A is configured to cause rendering of GUIs 112 on one or more displays 111 of the vehicle management system. The GUIs 112 may be rendered based at least in part on user inputs, vehicle statuses, landing instructions, and/or the like. For example, in response to receiving a user input indicating an emergency-related vehicle status, the apparatus 200A may cause rendering of a GUI 112 comprising information, actions, instructions, and/or the like, that is/are associated with responding to the emergency.

In various embodiments, the present methods, apparatuses, and computer program products extend functionality of the ADS-B system 105 to enable the ADS-B system 105 to broadcast bitstrings 121 that are indicative of one or more vehicle statuses. For example, the ADS-B system 105 may be configured to encode one or more scores within one or more segments of a bitstring 121. In doing so, the bit values in the segment of the bitstring 121 may be used by the landing prioritization system 103 to generate the score, enabling determination of the vehicle status and generation of landing instructions based thereon. In various embodiments, the apparatus 200A is configured to control functionality of the ADS-B system 105. For example, the apparatus 200A may generate a bitstring 121 based at least in part on vehicle data 115, input data 117, and/or the like. The apparatus 200A may cause the ADS-B system 105 to broadcast the bitstring 121, enabling receipt by the landing prioritization system 103.

In some embodiments, the vehicle management system 107 is configured to generate or obtain vehicle data 115 that is indicative of operation of the vehicle 101. Additionally, in some embodiments, the vehicle management system 107 is configured to control the vehicle 101. The vehicle management system 107 may include any number of computing device(s) and/or other system(s) embodied in hardware, software, firmware, and/or the like. For example, the vehicle management system 107 may include one or more vehicle controls (e.g., rotor speed, rotor orientation, thrust, brakes, flaps, and/or the like). In some embodiments, the vehicle management system 107 includes one or more vehicle recording systems configured to obtain and record one or more aspects of the vehicle or operation thereof. For example, the vehicle management system 107 may include a transponder, data uplink system, traffic collision avoidance system (TCAS), the ADS-B system 105, a flight recorder, and/or the like.

In some embodiments, the vehicle management system 107 and/or apparatus 200A is/are configured to obtain and store in the data store 106 vehicle data 115, user inputs, condition data 119A, vehicle statuses 125, priority rankings 127, landing instructions 129, and/or the like. In various embodiments, data obtained by the vehicle management system 107 may be accessible to the landing prioritization system 103, a ground station 140, and/or the like. The data may be stored in one or more data stores 106, data stores 104, and/or the like. In some embodiments, the vehicle management system 107 includes or is in communication with one or more sensors 113 of the vehicle 101. For example, the vehicle management system 107 may include or communicate with image sensors, altitude sensors, pressure sensors, temperature sensors, audio sensors, accelerometers, gyroscopes, magnetometers, inertial measurement units, and/or the like. In various embodiments, the vehicle management system 107 includes one or more sensors 113, systems, and/or the like configured to determine a physical position of the vehicle 101. For example, the vehicle management system 107 may include one or more satellite-based positioning systems configured to generate a geographic orientation of a vehicle, such as a global position system (GPS) module.

In some embodiments, sensors 113 are configured to measure functionality or health of one or more vehicle components, vehicle functions, and/or the like. For example, a sensor 113 may be configured to generate readings indicative of engine failure, hydraulic failure, control failure, and/or the like. Additionally, or alternatively, in some embodiments, a sensor 113 is configured to measure physiological signals of one or more vehicle occupants, which may indicate health of the occupant. For example, a sensor 113 may measure heart rate, respiration rate, blood pressure, gait, biometrics, audio, and/or the like of one or more vehicle occupants. In some embodiments, a sensor 113 is configured to measure one or more properties of an environment external to the vehicle 101. For example, the sensor 113 may measure wind velocity, wind direction, precipitation properties, visibility, air quality, and/or the like.

In some embodiments, the vehicle management system 107 includes one or more input devices 109 configured to receive inputs from a user, such as an operator of the vehicle 101 or another occupant. The user inputs may be stored as input data 117 and obtained by the apparatus 200A for use in various processes, such as communicating vehicle statuses and obtaining landing instructions, rendering GUIs 112 for mitigation of onboard emergencies, and/or the like. The input device 109 may include any number of devices that enable HMI between a vehicle operator, the vehicle management system 107, the apparatus 200A, and/or the like. In some embodiments, the input device 109 includes one or more buttons, cursor devices, joysticks, touch screens, including three-dimensional or pressure-based touch screens, camera, finger-print scanners, accelerometer, retinal scanner, gyroscope, magnetometer, or other input devices. For example, the input device 109 may include a touchscreen by which a vehicle operator may provide user inputs for indicating vehicle statuses, such as emergency conditions, or requesting approval to land at a landing site. In some embodiments, the input device 109 includes one or more vehicle controls (e.g., joysticks, thumb sticks, yokes, steering wheels, accelerator control, thrust control, brake control, and/or the like) that enable an operator to control and navigate the vehicle 101 in accordance with landing instructions 129.

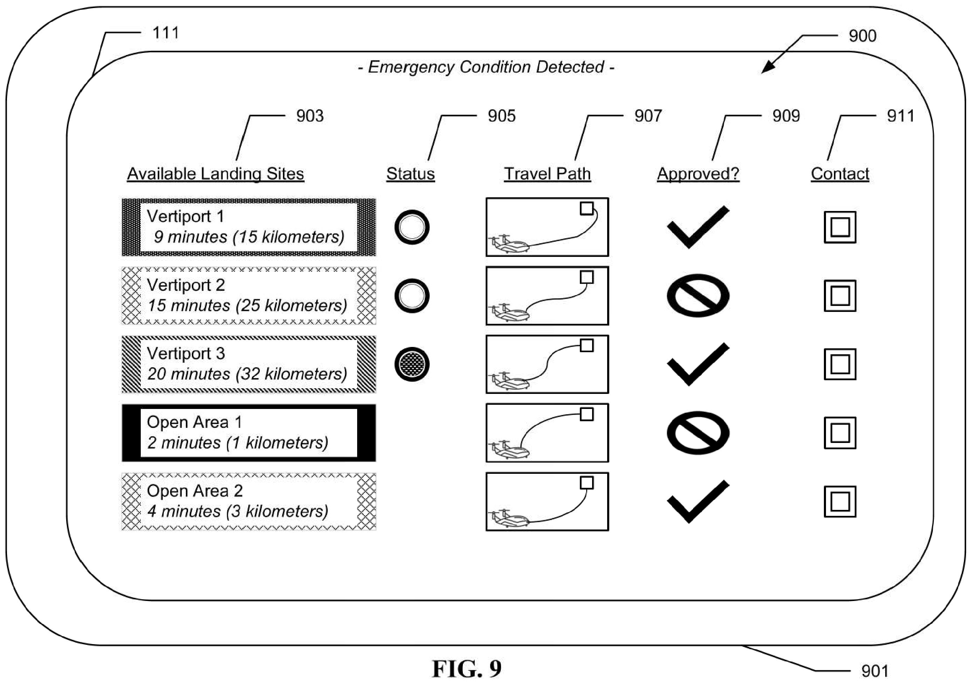

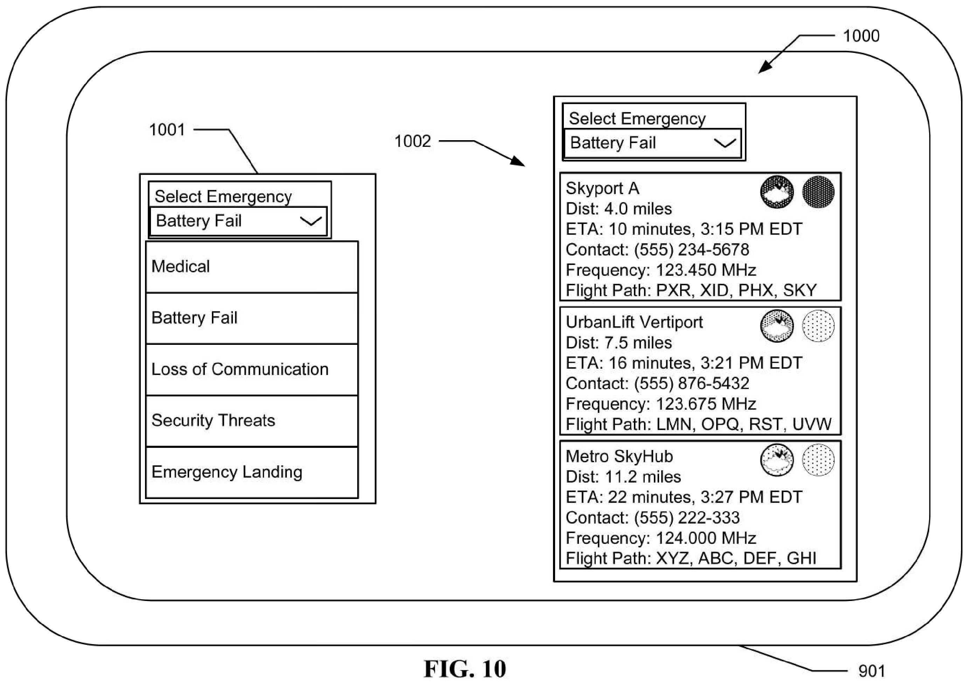

In various embodiments, the vehicle management system 107 includes one or more displays 111. In some embodiments, the display 111 includes a CRT (cathode ray tube), LCD (liquid crystal display) monitor, LED (light-emitting diode) monitor, and/or the like, for displaying information/data to a vehicle operator, vehicle occupant, and/or the like. In some embodiments, GUIs 112 and visual representations related to vehicle statuses, landing instructions, emergency response, and/or the like, are rendered on the display 111. For example, the landing prioritization system 103, apparatus 200A, and/or the like, may cause rendering on the display 111 of GUIs shown in FIGS. 9 and 10, respectively. In some embodiments, the GUIs 112 include selectable fields that enable user interaction to control displays of information. For example, a GUI 112 may include selectable fields that may be selected by a user to indicate a particular vehicle status (e.g., system failure, medical emergency, security issue, adverse weather, and/or the like). As another example, a GUI 112 may include selectable fields that may be selected by a user to cause display of landing instructions 129, including indications of a designated or alternative landing site.

In some embodiments, the data store 106 is accessible to one or more of the apparatus 200A, the vehicle management system 107, the ground station 140, the landing prioritization system 103, and/or the like. The data store 106 may be representative of a plurality of data stores 106 as can be appreciated. The data stored in the data store 106, for example, is associated with the operation of the various applications, apparatuses, and/or functional entities described herein. The data stored in the data store 106 may include, for example, vehicle data 115, input data 117, condition data 119A, and/or the like. In various embodiments, vehicle data 115 includes any data associated with the operation of the vehicle 101, occupants of the vehicle 101, operators of the vehicle 101, and/or the like. In some embodiments, the vehicle data 115 includes readings from one or more sensors or systems aboard the vehicle 101. For example, the vehicle data 115 may include vehicle type, vehicle model, fuel capacity, fuel consumption, fuel tank specification, engine specification, emission rating, and/or the like. As another example, the vehicle data 115 may include temperatures, pressures, humidity levels, oxygen levels, carbon dioxide levels, and/or the like of the vehicle exterior or vehicle interior. As another example, the vehicle data 115 may include images, videos, audio recordings, and/or the like of the vehicle exterior or vehicle interior. As another example, the vehicle data 115 may include measurements of vehicle speed, acceleration, ascension, descension, pitch, turning rate, bank angle, and/or the like. In some embodiments, vehicle data 115 includes a metric of difference between a sensor measurement and a predetermined threshold, such as a target value, target range, limit, and/or the like. In some embodiments, vehicle data 115 includes a physical location of the vehicle 101, an altitude of the vehicle 101, a proximity of the vehicle 101 to one or more locations (e.g., destinations, territorial boundaries), and/or the like.

In some embodiments, input data 117 includes user inputs provided to the input device 109. For example, input data 117 may include selections, inputted text strings, and/or the like. As another example, input data 117 may include audio recordings, video recordings, and/or the, which may include utterances or images of user inputs. In some embodiments, input data 117 includes inputs to vehicle controls. For example, input data 117 may include inputs to steering devices, thrust controls, brakes, communication systems, life support systems, and/or the like.

In various embodiments, condition data 119A includes data associated with condition categories. For example, the condition data 119A may include condition categories of emergency information, weather, battery level, vehicle classification, ETA, and/or the like. In some embodiments, the condition data 119A includes sets of possible vehicle statuses in accordance with respective condition categories. For example, in accordance with the emergency information category, the condition data 119A may include vehicle statuses of no emergency, system failure, medical emergency, extreme weather, and/or the like. As another example, in accordance with the battery level category, the condition data 119A may include a plurality of battery ranges. In some embodiments, the condition data 119A includes respective scores configured to represent a vehicle status in accordance with a condition category. In some embodiments, the condition data 119A includes an encoding schema by which scores may be represented in segments of a bitstring. For example, the condition data 119A may include associations between subsets of bits in a bitstream and respective condition categories.

In some embodiments, the condition data 119A includes emergency response resources including communication data, emergency service data, and/or the like. In some embodiments, the communication data includes contact information for external systems 160, such as hospitals, security services, fire response services, vehicle maintenance services, and/or the like. In some embodiments, the emergency service data includes one or more databases of landing sites at which one or more emergency services may be accessed (e.g., ambulance, medical, fire, security, vehicle facilities, and/or the like).

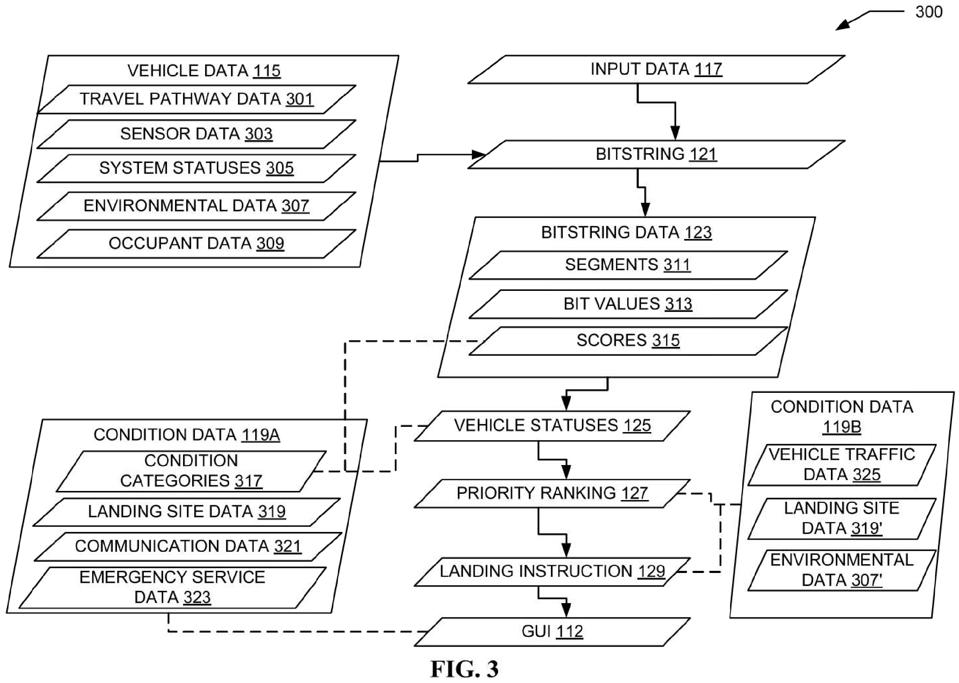

Further example aspects of the vehicle data 115, input data 117, condition data 119A, bitstrings 121, and/or the like, are shown in the data architecture 300 illustrated in FIG. 3 and described herein.

In some embodiments, the data store 104 is accessible to one or more of the apparatus 200B, the vehicle management system 107, the ground station 140, the vehicle 101, and/or the like. The data store 104 may be representative of a plurality of data stores 104 as can be appreciated. The data stored in the data store 104, for example, is associated with the operation of the various applications, apparatuses, and/or functional entities described herein. The data stored in the data store 104 may include, for example, condition data 119B, bitstring data 123, vehicle statuses 125, priority rankings 127, landing instructions 129, and/or the like.

In various embodiments, the condition data 119B includes data described herein pursuant to condition data 119A, vehicle data 115, and/or the like. For example, the condition data 119B may include condition categories, environmental data, and/or the like. In some embodiments, the condition data 119B further includes vehicle traffic data, landing site data, and/or the like. In some embodiments, the vehicle traffic data includes information associated with vehicle traffic densities, vehicle traffic alerts (e.g., Notice to Airmen (NOTAM)), and/or the like. In some embodiments, landing site data includes data indicative of landing site availability, capacity, capabilities, and/or the like. For example, the landing site data may include databases of hospitals, vehicle facilities, and/or the like that include landing sites.

In some embodiments, the bitstring data 123 includes bitstrings 121 and data generated or determined based at least in part on bitstrings 121. For example, the bitstring data 123 may include respective segments and bit values of a bitstring 121, which are associated with various condition categories. As another example, the bitstring data 123 includes scores generated based at least in part on the bit values of respective segments. In various embodiments, vehicle statuses 125 include properties or characteristics of a vehicle 101, vehicle occupants, an environment proximate to the vehicle 101, and/or the like, which may be associated with one of a plurality of condition categories. In some embodiments, vehicle statuses 125 include battery level ranges, weather severity levels, vehicle classifications, emergency conditions, and/or the like.

In some embodiments, a priority ranking 127 includes a set of vehicles 101 defining an ordered sequence by which the vehicles 101 may land at one or more landing sites. For example, a priority ranking 127 may indicate which of a plurality of vehicles 101 may land first at a landing site and a subsequent order by which a remaining subset of the vehicles 101 may land at the landing site. In some embodiments, a priority ranking 127 includes metadata including landing site location, travel pathways to the landing site (e.g., which may be the same or different for the associated vehicles), landing times, and/or the like. In various embodiments, a priority ranking 127 is generated based at least in part on vehicle statuses 125, condition data 119A, 119B, and/or the like.

In some embodiments, a landing instruction 129 includes an instruction to land at a landing site in accordance with a priority ranking 127. The priority ranking 127 may indicate which of a plurality of vehicles 101 may land at a landing site (e.g., other vehicles 101 being instructed to land elsewhere), or an order by which the vehicles 101 may land sequentially at the landing site. Additionally, or alternatively, in some embodiments, a landing instruction 129 directs a vehicle 101 to land at a second landing site (e.g., in response to prioritization of another vehicle at a first intended landing site of the vehicle 101 and/or unavailability of the first intended landing site).

Further example aspects of the condition data 119B, bitstring data 123, vehicle statuses 125, priority rankings 127, landing instructions 129, and/or the like, are shown in the data architecture 300 illustrated in FIG. 3 and described herein.

In some embodiments, the ground station 140 includes any number of computing device(s) and/or other system(s) embodied in hardware, software, firmware, and/or the like that control, operate, receive and maintain data respective to, and/or monitor one or more vehicles 101. For example, a ground station 140 may include or embody a computing terminal by which one or more vehicles are remotely operated. In some embodiments, the ground station 140 includes one or more displays 111' by which data corresponding to one or more vehicles and/or missions is displayed to a ground station operating entity. In some embodiments, the ground station includes one or more input devices 109' by which user input may be obtained. For example, the input device 109' may receive user inputs indicating or embodying instructions or commands for controlling vehicles 101. In some embodiments the ground station 140 includes an apparatus 200A. For example, the apparatus 200A may cause rendering of emergency response interfaces on the display 111'. As another example, in response to a user input to the input device 109', the apparatus 200A may cause an ADS-B system 105 to generate a bitstring indicative of a vehicle status 125 in accordance with one or more condition categories.

In some embodiments, the external system 160 includes any number of services, platforms, and/or the like that provide data to the landing prioritization system 103, vehicle 101, ground station 140, and/or the like. In some embodiments, external systems 160 include weather systems, vehicle traffic monitoring or administration systems, landing site monitoring or administration systems, navigation systems, vehicle tracking systems (e.g., primary radar, secondary radar, and/or the like), vehicle maintenance systems, emergency response systems, and/or the like. For example, an external system 160 may include a medical system (e.g., hospital, ambulance, and/or the like), a security system, a fire response system, and/or the like. As another example, an external system 160 may include a weather forecasting system that generates weather reports or other environmental data. As another example, in an aerial vehicle context, an external system 160 may include an air traffic controller.

In various embodiments, external systems 160 receive data from the landing prioritization system 103, vehicle 101, ground station 140, and/or the like. For example, the external system 160 may receive from the apparatus 200B a vehicle status 125, a priority ranking 127, a landing instruction 129, and/or the like. As another example, the external system 160 may receive from the apparatus 200A one or more communications related to accessing emergency response resources, such as ambulances, medical services, security services, vehicle maintenance services, landing guidance or assistance systems, and/or the like.

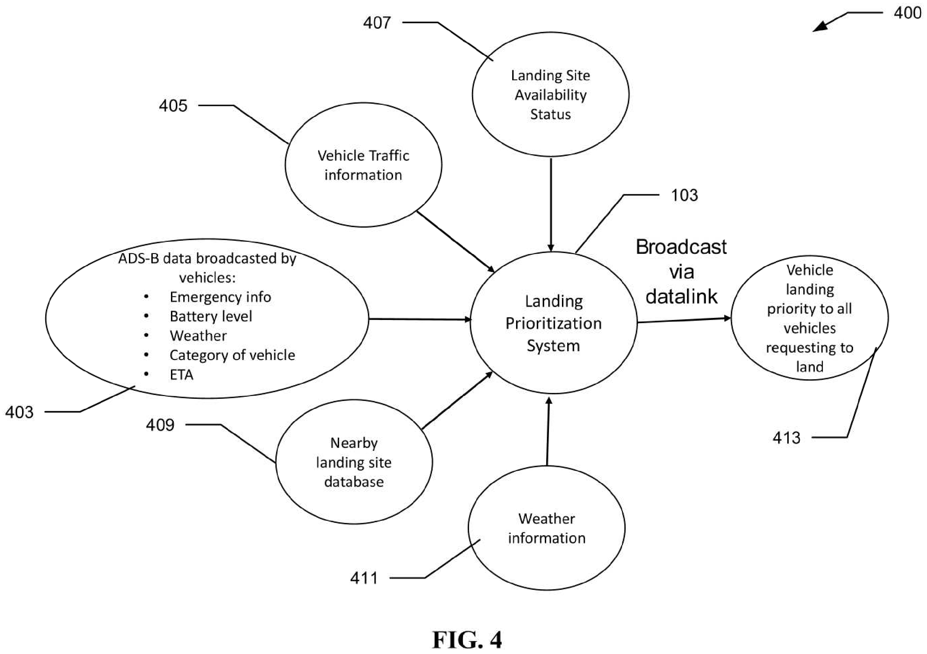

Additional example functionality and processes of the apparatuses 200A, 200B are shown in the dataflows, workflows, and processes shown in FIGS. 4-8 and 11 and described herein.

In some embodiments, the apparatus 200A, the apparatus 200B, the vehicle management system 107, the sensors 113 the ground station 140, the external system 160, and/or the like, are communicable over one or more communications network(s), for example the communications network(s) 150. It should be appreciated that the communications network 150 in some embodiments is embodied in any of a myriad of network configurations. In some embodiments, the communications network 150 embodies a public network (e.g., the Internet). In some embodiments, the communications network 150 embodies a private network (e.g., an internal, localized, and/or closed-off network between particular devices). In some other embodiments, the communications network 150 embodies a hybrid network (e.g., a network enabling internal communications between particular connected devices and external communications with other devices). In some embodiments, the communications network 150 embodies a satellite-based communication network. Additionally, or alternatively, in some embodiments, the communications network 150 embodies a radio-based communication network that enables communication between the apparatus 200A, the apparatus 200B, the vehicle management system 107, the sensors 113 the ground station 140, the external system 160, and/or the like. For example, the apparatus 200B may provision landing instructions 129 to the vehicle via a communication gateway, datalink, and/or the like. The communications network 150 in some embodiments may include one or more transponders, satellites, base station(s), relay(s), router(s), switch(es), cell tower(s), communications cable(s) and/or associated routing station(s), and/or the like. In some embodiments, the communications network 150 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

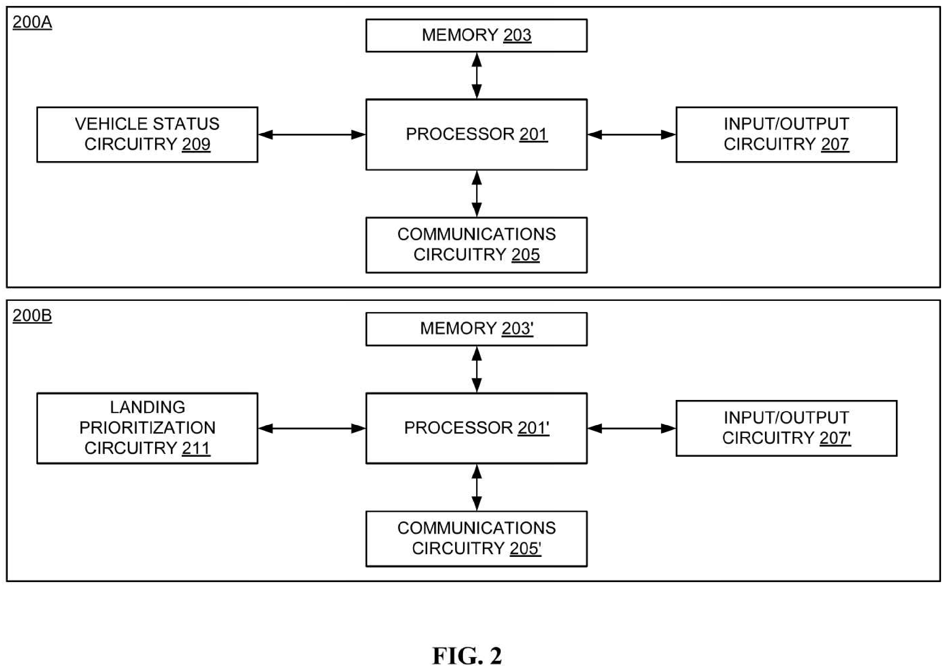

FIG. 2 illustrates block diagrams example apparatuses 200A, 200B that may be specially configured in accordance with at least some example embodiments of the present disclosure. As further described, the apparatus 200A may carry out functionality aboard the vehicle 101, at the ground station 140, and/or the like, and the apparatus 200B may carry out functionality of the landing prioritization system 103.

The apparatuses 200A, 200B may carry out functionality and processes described herein to enable vehicle status determination, landing instruction, landing priority determination, provision of emergency response interfaces, and/or the like. In some embodiments, the apparatus 200 includes a processor 201, memory 203, communications circuitry 205, input/output circuitry 207, vehicle status circuitry 209, and landing prioritization circuitry 211. In some embodiments, the apparatus 200 is configured, using one or more of the processor 201, memory 203, communications circuitry 205, input/output circuitry 207, and/or vehicle status circuitry 209 to execute and perform the operations described herein. In some embodiments, the apparatus 200 includes a processor 201', memory 203', communications circuitry 205', input/output circuitry 207', and landing prioritization circuitry 211. In some embodiments, the apparatus 200B is configured, using one or more of the processor 201', memory 203', communications circuitry 205', input/output circuitry 207', and landing prioritization circuitry 211 to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, outputting, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatuses 200A, 200B embodies a particular, specially configured computing entities transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatuses 200A, 200B provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200A. The processor 201' (and/or co-processor or any other processing circuitry assisting or otherwise associated with the processor) may be in communication with the memory 203' via a bus for passing information among components of the apparatus 200B. In some embodiments, the memory 203 is embodied as a data store 106 as shown in FIG. 1 and described herein. In some embodiments, the memory 203 includes vehicle data, input data, condition data, and/or the like, as further architected in FIG. 3 and described herein. In some embodiments, the memory 203' is embodied as a data store 104 as shown in FIG. 1 and described herein. In some embodiments, the memory 203' includes bitstring data, condition data, vehicle statuses, priority rankings, landing instructions, and/or the like, as further architected in FIG. 3 and described herein.

In some embodiments, for example, the memory 203 and/or memory 203' is/are non-transitory and may include, for example, one or more volatile and/or non-volatile memories. In other words, for example, the memory 203 or memory 203' in some embodiments includes or embodies an electronic storage device (e.g., a computer readable storage medium). In some embodiments, the memory 203 is configured to store information, data, content, applications, instructions, or the like, for enabling the apparatus 200A to carry out various functions in accordance with example embodiments of the present disclosure (e.g., generating bitstrings indicative of vehicle statuses, causing an ADS-B system to broadcast bitstrings, receiving and moving in accordance with landing instructions, generating and rendering emergency response interfaces, and/or the like). In some embodiments, the memory 203' is configured to store information, data, content, applications, instructions, or the like, for enabling the apparatus 200B to carry out various functions in accordance with example embodiments of the present disclosure (e.g., generating scores based on ADS-B bitstrings, determining vehicle statuses, generating priority rankings, generating landing instructions, provisioning landing instructions to vehicles, and/or the like).

The processors 201, 201' may be embodied in a number of different ways. For example, in some embodiments, the processor 201, the processor 201', and/or the like includes one or more processing devices configured to perform independently. Additionally, or alternatively, in some embodiments, the processor 201, the processor 201', and/or the like includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200A or apparatus 200B, and/or one or more remote or "cloud" processor(s) external to the apparatus 200A or the apparatus 200B.

In an example embodiment, the processor 201 is configured to execute instructions stored in the memory 203 or otherwise accessible to the processor. In another example embodiment, the processor 201' is configured to execute instructions stored in the memory 203' or otherwise accessible to the processor. Additionally, or alternatively, the processor 201, the processor 201', and/or the like, in some embodiments is/are configured to execute hard-coded functionality. As such, whether configured by hardware or software methods, or by a combination thereof, the processor 201 and the processor 201' represent entities (e.g., physically embodied in circuitry) capable of performing operations according to an embodiment of the present disclosure while configured accordingly. Additionally, or alternatively, as another example in some example embodiments, when the processor 201 and/or the processor 201' is/are embodied as an executor of software instructions, the instructions specifically configure the processor 201, the processor 201', and/or the like to perform the algorithms embodied in the specific operations described herein when such instructions are executed.

As one particular example embodiment, the processor 201 is configured to perform various operations associated with responding to emergency conditions aboard the vehicle 101. In some embodiments, the processor 201 includes hardware, software, firmware, and/or the like, that obtain vehicle data, input data, and/or the like from vehicle management systems 107, ground stations 140, external systems 160, and/or the like. For example, the processor 201 may obtain sensor data, user inputs, and/or the like that are indicative of vehicle statuses in accordance with one or more condition categories. As another example, the processor 201 may obtain landing instructions, generate and cause rendering of emergency response interfaces, and/or the like. In some embodiments, the processor 201 includes hardware, software, firmware, and/or the like, that receive condition data from the apparatus 200B, ground stations 140, external systems 160, and/or the like. In some embodiments, the processor 201 includes hardware, software, firmware, and/or the like, that configure an ADS-B system 105 to broadcast bitstrings that encode scores indicative of vehicle statuses.

As another example embodiment, the processor 201' is configured to perform various operations associated with generating scores based on bitstrings, determining vehicle statuses, and obtaining condition data, vehicle data, and/or the like. In some embodiments, the processor 201' includes hardware, software, firmware, and/or the like, that obtain condition data, vehicle data, and/or the like from the vehicle management system 107, ground station 140, external system 160, and/or the like. For example, the processor 201' may obtain weather reports, landing site availability, and/or the like, from external systems 160, and/or the like. In some embodiments, the processor 201' includes hardware, software, firmware, and/or the like, that generate one or more scores based at least in part on one or more segments of a bitstring. For example, the processor 201' may generate a plurality of scores in a plurality of condition categories based on different segments of a bitstring. In some embodiments, the processor 201' includes hardware, software, firmware, and/or the like, that determine vehicle statuses in accordance with one or more condition categories based at least in part on bitstring-derived scores. For example, the processor 201' may associate a score with a weather condition category and, based on the score, determine that a vehicle 101 is experiencing good weather, moderate weather, severe weather, extreme weather, and/or the like.

In some embodiments, the apparatus 200A includes input/output circuitry 207 and the apparatus 200B includes input/output circuitry 207' that provide output to a user and, in some embodiments, receives an indication of a user input. In various embodiments, the user is an operator of a vehicle 101, an operator of a ground station 140, a landing site administrator, a vehicle traffic administrator, and/or the like. For example, in some contexts, the input/output circuitry 207 provides output to and receives input from one or more interfaces aboard the vehicle 101, such as input devices, displays, audio input/output devices, and/or the like. As another example, in some contexts, the input/output circuitry 207' provides output to and receives input from one or more interfaces accessible to an administrator of a landing site, a vehicle traffic administrator, and/or the like.

In some embodiments, to provide such functionalities, the input/output circuitry 207 is in communication with the processor 201 and the input/output circuitry 207' is in communication with the processor 201'. The input/output circuitry 207, input/output circuitry 207', and/or the like may comprise one or more user interface(s) and in some embodiments includes a display that comprises the interface(s) rendered as a web user interface, an application user interface, a user device, a backend system, or the like. In some embodiments, the input/output circuitry 207, input/output circuitry 207', and/or the like, also includes a keyboard, a mouse, a joystick, vehicle controls (e.g., steering, power, braking, and/or the like), landing site controls (e.g., lighting controls, beacon controls, and/or the like), a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). The processor 201' and/or input/output circuitry 207' comprising the processor may be configured to control one or more functions of one or more user interface elements through computer program instructions (e.g., software and/or firmware) stored on a memory accessible to the processor 201' (e.g., memory 203', and/or the like). In some embodiments, the input/output circuitry 207, input/output circuitry 207', and/or the like includes or utilizes a user-facing application to provide input/output functionality to a display, audio input/output device, and/or the like.

In some embodiments, the apparatus 200A includes communications circuitry 205 and the apparatus 200B includes communications circuitry 205'. The communications circuitry 205, communications circuitry 205', and/or the like may include any means such as a device or circuitry embodied in either hardware or a combination of hardware and software that is configured to receive and/or transmit data from/to a network and/or any other device, circuitry, or module in communication with the associated apparatus. In this regard, in some embodiments the communications circuitry 205, the communications circuitry 205', and/or the like includes, for example, a network interface for enabling communications with a wired or wireless communications network, such as the network 150 shown in FIG. 1 and described herein. Additionally, or alternatively in some embodiments, the communications circuitry 205, the communications circuitry 205', and/or the like includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205, the communications circuitry 205', and/or the like includes circuitry for interacting with the antenna(s) and/or other hardware or software to cause transmission of signals via the antenna(s) or to handle receipt of signals received via the antenna(s). In some embodiments, the communications circuitry 205, the communications circuitry 205', and/or the like enables transmission to and/or receipt of data from the apparatus 200A, the apparatus 200B, vehicle management systems 107, ground stations 140, external systems 160, and/or the like. For example, the communications circuitry 205 may enable receipt of vehicle data, condition data, and/or the like, from the landing prioritization system 103 (e.g., via apparatus 200A), ground stations 140, external systems 160, and/or the like). As another example, the communications circuitry 205 may enable provision of landing requests to landing prioritization systems 103. As another example, the communications circuitry 205' may enable receipt of bitstrings from ADS-B systems 105 and output of landing instructions to the vehicle 101.

The vehicle status circuitry 209 includes hardware, software, firmware, and/or a combination thereof, that carry out processes for provisioning vehicle statuses to the landing prioritization system 103. For example, in some contexts, the vehicle status circuitry 209 includes hardware, software, firmware, and/or the like, that receive user inputs, sensor readings, and/or the like, and determine, based thereon, a vehicle status in accordance with one or more condition categories. In some embodiments, the vehicle status circuitry 209 includes hardware, software, firmware, and/or the like, that generate a score based at least in part on the vehicle status. In doing so, the vehicle status circuitry 209 may enable the vehicle status to be represented via a sequence of bit values. For example, scores of 0, 1, 2, and 3 may be represented by bit values of 00, 01, 10, and 11, respectively. In some embodiments, the vehicle status circuitry 209 includes hardware, software, firmware, and/or the like, that determine an ETA of the vehicle 101 to a landing site and generate a plurality of values that enable the ETA to be represented via bit values. For example, the vehicle status circuitry 209 may generate an ETA comprising a number of hours (e.g., representable via five bits), a number of minutes (e.g., representable by six bits), and a number of seconds (e.g., representable by six bits). In some embodiments, the vehicle status circuitry 209 includes hardware, software, firmware, and/or the like, that cause an ADS-B system 105 to broadcast a bitstring comprising one or more segments that encode scores representative of vehicle statuses. For example, the vehicle status circuitry 209 may cause the ADS-B system 105 to periodically broadcast a bitstring encoding one or more vehicle statuses. As another example, the vehicle status circuitry 209 may cause the ADS-B system 105 to broadcast a bitstring in response to determining that a vehicle status in one or more condition categories has changed relative to a previous broadcasted vehicle status.

Additionally, or alternatively, in some embodiments, the vehicle status circuitry 209 may generate a symbol based at least in part on user input and generate a sequence of bit values that may represent the symbol in accordance with a character encoding standard, such as American Standard Code for Information Interchange (ASCII). For example, the vehicle status circuitry may generate a score (e.g., ASCII value 0-127) that is representative of an alphanumeric character, enabling encoding of the alphanumeric character using seven bits. In some embodiments, the vehicle status circuitry 209 includes a separate processor, specially configured field programmable gate array (FPGA), and/or a specially programmed application specific integrated circuit (ASIC).

The landing prioritization circuitry 211 includes hardware, software, firmware, and/or a combination thereof, that carry out processes for determining vehicle statuses, performing landing prioritization, and generating landing instructions. For example, the landing prioritization circuitry 211 may generate scores in accordance with condition categories based at least in part on bitstrings received from ADS-B systems 105. In some embodiments, the landing prioritization circuitry 211 includes hardware, software, firmware, and/or the like, that generate a priority ranking of two or more vehicles 101 based at least in part on the respective vehicle statuses associated with the vehicles 101. In some embodiments, the landing prioritization circuitry 211 includes hardware, software, firmware, and/or the like, that generate landing instructions based at least in part on vehicle statuses, priority rankings, and/or the like. Additionally, in some embodiments, the landing prioritization circuitry 211 is configured to generate priority rankings, landing instructions, and/or the like based at least in part on conditions of the landing site (e.g., weather, availability, capabilities, and/or the like). The landing prioritization circuitry 211 may include hardware, software, firmware, and/or the like, that cause vehicles 101 to move in accordance with landing instructions. In some embodiments, the landing prioritization circuitry 211 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or vehicle status circuitry 209 are combinable. In some embodiments, two or more of the processor 201', memory 203', communications circuitry 205', input/output circuitry 207', and/or landing prioritization circuitry 211 are combinable. Additionally, or alternatively, in some embodiments, one or more of the sets of circuitry perform some or all of the functionality described associated with another component. For example, in some embodiments, two or more of the sets of circuitry 201-209 or sets of circuitry 201'-207' and 211 are combined into a single module embodied in hardware, software, firmware, and/or a combination thereof. Similarly, in some embodiments, one or more of the sets of circuitry of the apparatus 200A, for example the memory 203, communication circuitry 205, input/output circuitry 207 and/or vehicle status circuitry 209, is/are combined with the processor 201, such that the processor 201 performs one or more of the operations described above with respect to each of these sets of circuitry 203-209. In some embodiments, one or more of the sets of circuitry of the apparatus 200B, for example the memory 203', communication circuitry 205', input/output circuitry 207', and/or landing prioritization circuitry 209', is/are combined with the processor 201', such that the processor 201' performs one or more of the operations described above with respect to each of these sets of circuitry 203'-207' and 211.

### Example Data Architecture, Dataflows, and Workflows of the Disclosure

Having described example systems and apparatuses in accordance with embodiments of the present disclosure, example data architectures, dataflows, and workflows for vehicle status determination, landing prioritization, and emergency response in accordance with the present disclosure will now be discussed. In some embodiments, the systems and/or apparatuses described herein maintain data environment(s) that enable the operations, processes, and/or the like in accordance with the data architectures described herein. For example, in some embodiments, the systems and/or apparatuses described herein function in accordance with the data architectures depicted and described herein with respect to FIG. 3 and are maintained via the apparatus 200A, the apparatus 200B, and/or the like. As another example, one or more prioritization systems, vehicles, vehicle management systems, ground stations, and/or the like are configured in accordance with the dataflows and/or workflows shown in FIGS. 4-8, respectively, and described herein.

FIG. 3. illustrates an example data architecture 300 in accordance with at least some example embodiments of the present disclosure. In some embodiments, vehicle data 115 includes vehicle heading, attitude, velocity, acceleration, pitch, travel phase (e.g., taxiing, ascending, cruising, descending, arriving, and/or the like), altitude, internal temperature, internal pressure, vibration level, respective component or system health, and/or the like. In some embodiments, the vehicle data 115 includes a make, model, version, type, or other classification of the vehicle 101.

In various embodiments, the vehicle data 115 includes travel pathway data 301, sensor data 303, system statuses 305, environmental data 307, occupant data 309, and/or the like. In some embodiments, the condition data 119A includes one or more data depicted in association with condition data 119B, and vice versa. For example, in some contexts, the vehicle data 115 includes vehicle traffic data 325, landing site data 327, and/or the like.

In some embodiments, the travel pathway data 301 includes one or more travel pathways of the vehicle 101 (e.g., historical, current, and future travel pathways). For example, travel pathway data 301 may include an origin (e.g., city, airport, and/or the like) and one or more destinations, such as a landing site (e.g., airport, helipad, vertiport, ground station, and/or the like), a political boundary, a city, a geographical feature, and/or the like. In various embodiments, the travel pathway data 301 includes respective routes, waypoints, and/or the like for traversing between an origin and a destination, including traversal trajectory, altitude, speed, and/or the like. In some embodiments, the travel pathway data 301 includes vehicle speeds, operating altitudes, and/or the like that may be met by the vehicle 101 during traversal of the travel pathway. For example, in an aerial context, the travel pathway data 301 may include a cruising speed, cruising altitude, and/or the like. In various embodiments, travel pathway data 301 includes a purpose or classification of the vehicle 101. For example, the travel pathway data 301 may include vehicle classifications of ambulance, surveillance, cargo transportation, general occupant transportation, privileged occupant transportation, security, and/or the like. The travel pathway data 301 may indicate that a payload of the vehicle 101 includes a privileged occupant (e.g., very important person (VIP)), a patient passenger (e.g., occupant in need of medical attention), and/or the like.

In some embodiments, sensor data 303 includes readings, measurements, metrics, and/or the like, obtained or derived from from one or more sensors 113. For example, sensor data 303 may include measurements of temperature, pressure, vibration, velocity, acceleration, position, air quality, air composition, audio, images or videos, physiological signals, moisture, and/or the like. In various embodiments, the sensor data 303 includes measurements of vehicle performance or health including engine power, battery level, hydraulic pressure, rotor stability, communication range, and/or the like. In various embodiments, system statuses 305 include conditions or states of vehicle components, processes, and/or the like. For example, system statuses 305 may include warnings or other indications of error or fault in vehicle engines, batteries, hydraulics, control systems, communication systems, and/or the like. As another example, system statuses 305 may include communication capability statuses, measurements of control responsiveness, and other measurements of vehicle or vehicle operator performance.

In some embodiments, environmental data 307 includes environmental data comprising one or more meteorological conditions present, forecasted, or previously documented along one or more portions of a travel pathway. For example, the environmental data 307 may include eddy dissipation rates (EDRs), wind patterns, wind intensities, wind shear or other turbulence-causing conditions, temperature, pressure, humidity, precipitation levels, precipitation types (e.g., rain, snow, sleet, fog, ice, and/or the like), dust or other debris conditions, and/or the like. In some embodiments, the environmental data 307 includes weather reports from external systems 160. In some embodiments, the environmental data 307 is associated with sensor data 303, such as temperature readings, pressure readings, wind velocity and direction, and/or the like.

In various embodiments, occupant data 309 includes data associated with individuals aboard the vehicle 101. For example, occupant data 309 may include occupant quantity, total occupant mass, individual occupant mass, occupant classification (e.g., general, privileged, emergency, and/or the like), occupant role (e.g., passenger, operator, technician, maintenance, and/or the like), occupant identifiers, and/or the like. As another example, occupant data 309 may include physiological measurements or behavioral statuses, such as heart rate, respiration rate, blood pressure, vocal volume, occupant position, eye tracking information, occupant biometrics, occupant temperament, and/or the like. In various embodiments, occupant data 309 is indicative of occupant health. For example, occupant data 309 may include indications that one or more occupants are being transported for medical purposes, security purposes, and/or the like. In some embodiments, occupant data 309 further applies to non-human cargo carried by the vehicle, such as goods, packages, and/or the like. For example, the occupant data 309 may include identifications, masses, volumes, and/or the like that are carried by the vehicle 101.

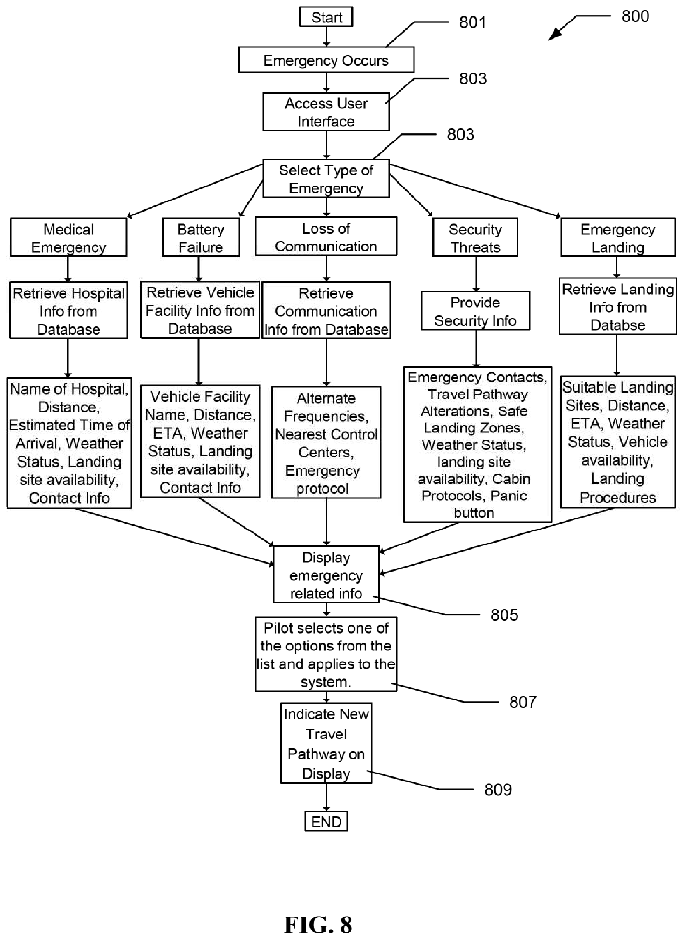

In some embodiments, the input data 117 includes user inputs obtained from vehicle occupants including vehicle operators, technicians, maintenance personnel, staff, passengers, and/or the like. For example, the input data 117 includes selections to GUIs 112, such as emergency response interfaces. In various embodiments the input data 117 includes selections or other indications of vehicle statuses 125 provided by a user. For example, the input data 117 may include selections of emergency types as shown in the workflow 800 (FIG. 8). As another example, the input data 117 may include symbols (e.g., alphanumeric characters, and/or the like) inputted by a user via keyboards, touch screens, vocal utterances, and/or the like.

In various embodiments, vehicle statuses 125 are generated based at least in part on the input data 117, the vehicle data 115, and/or the like. For example, a vehicle status 125 of extreme weather, ambulance emergency, security threat, system failure, and/or the like, may be generated based at least in part on input data 117, vehicle data 115, and/or the like. As another example, a vehicle status 125 of 50-75% battery level, severe weather, surveillance vehicle classification, privileged occupant vehicle classification, and/or the like, may be generated based at least in part on vehicle data 115, input data 117, and/or the like. In various embodiments, a score 315 is generated based at least in part on a vehicle status 125. The score 315 may represent the vehicle status 125 in accordance with a condition category 317. In some embodiments, a bitstring 121 includes one or more segments of bit values configured to represent one or more scores 315. For example, the bitstring 121 may include 32 bits and subsets of the 32 bits may be configured to represent different scores 315 in accordance with condition categories 317. In some embodiments, bitstrings 121, scores 315, vehicle statuses 126, and condition categories 317 are configured in accordance with Table. 1.

**Table 1.**

| Condition Category | Number of Bits Allocated | Bitstream Component Value | Vehicle Status Indicated |
|---|---|---|---|
| Emergency Information | 2 | 0 | No emergency |
| | | 1 | System failure |
| | | 2 | Medical emergency |
| | | 3 | Extreme weather conditions |
| Weather Conditions | 2 | 0 | Good weather |
| | | 1 | Moderate weather |
| | | 2 | Bad weather |
| | | 3 | Extreme weather (Emergency condition) |
| Battery Level | 2 | 0 | 75-100% |
| | | 1 | 50-75% |
| | | 2 | 25-50% |
| | | 3 | 0-25% (Emergency condition) |
| Vehicle Classification | 2 | 0 | Vehicle carrying four or more passengers |
| | | 1 | Vehicle carrying VIPs (Special priority) |
| | | 2 | Surveillance operations |
| | | 3 | Ambulance services (Emergency condition) |
| Estimated Time of Arrival | 17 total bits | | |
| | 5 bits - Hours Value | | |
| | 6 bits - Minutes | | |
| | Value | | |
| | 6 bits - Seconds | | |
| | Value | | |
| Other | 7 | | |

In some embodiments, the 7 unallocated bits (or another quantity of unallocated bits) are configured to represent one or more symbols, such as ASCII characters. For example, a first segment of the bitstring (e.g., allocating two bits) may be used to indicate vehicle statuses in accordance with a condition category of emergency information. The segment may encode a score of 1, indicative of system failure, or a score of 2, indicative of a medical emergency. In some embodiments, an additional segment of the bitstring is configured to encode a score that is representative of a symbol in accordance with a character encoding standard. In doing so, a text string may be represented by encoding of individual symbols within a plurality of ADS-B broadcasts. In this manner, additional emergency information, such as identification of a failed system or a medical issue, may be broadcast to the landing prioritization system 103 via the ADS-B system. For example, as shown in Table 2, a first segment of a first bitstring may encode a score representative of a vehicle status "System Failure," and a second segment of the first bitstring, in combination with the second segment of a plurality of successive bitstrings, may encode values representative of text symbols. In this manner, a text string description of system failure "Engine System Fail," may be communicated via the plurality of ADS-B broadcasts.

**Table 2.**

| Broadcast Number | Binary | Character | Decimal | Hex |
|---|---|---|---|---|
| Broadcast1 | 0000010 | Indicating start of information | 2 | 02 |
| Broadcast2 | 1000101 | E | 69 | 45 |
| Broadcast3 | 1001110 | N | 78 | 4E |
| Broadcast4 | 1100111 | G | 71 | 47 |
| Broadcast5 | 1001001 | I | 73 | 49 |
| Broadcast6 | 1101110 | N | 78 | 4E |
| Broadcast? | 1000101 | E | 69 | 45 |
| Broadcast8 | 0010000 | (Space) | 32 | 20 |
| Broadcast9 | 1001101 | S | 83 | 53 |
| Broadcast10 | 1010111 | Y | 89 | 59 |
| Broadcast11 | 1001101 | S | 83 | 53 |
| Broadcast12 | 1010100 | T | 84 | 54 |
| Broadcast13 | 1000101 | E | 69 | 45 |
| Broadcast14 | 1001100 | M | 77 | 4D |
| Broadcast15 | 0010000 | (Space) | 32 | 20 |
| Broadcast16 | 1000110 | F | 70 | 46 |
| Broadcast17 | 1000001 | A | 65 | 41 |
| Broadcast18 | 1001001 | I | 73 | 49 |
| Broadcast19 | 1001100 | L | 76 | 4C |
| Broadcast20 | 0000011 | End of text | 3 | 03 |

In some embodiments, condition data 119 includes condition categories 317, landing site data 319, communication data 321, emergency service data 323, and/or the like. In some embodiments, condition categories 317 include emergency information, batter level, vehicle classification, and/or the like. In some embodiments, a condition category 317 is associated with a plurality of vehicle statuses 125. In some embodiments, a condition category 317 includes ETA to a landing site. In some embodiments, a condition category 317 includes "other," which may refer to encodings of symbols, such as ASCII characters, and/or the like. In various embodiments, the present methods, apparatuses, and computer program products configure an ADS-B system to generate a bitstring 121 in which subsets of the bit values are associated with one of a plurality of condition categories 317. For example, as shown in Table 1, two bits may be allocated to each of emergency information, weather conditions, battery level, and vehicle classification, seventeen bits may be allocated to ETA, and seven bits may be reserved or used for encoding other information, such as symbols.

In various embodiments, landing site data 319, 319' includes information, statuses, and/or the like associated with one or more landing sites. For example, landing site data 319 may include a landing site name, landing site location, capacity of the landing site, current occupancy or availability of the landing site, infrastructure at the landing site (e.g., vehicle facilities, medical services, security services, fire response services, and/or the like), travel pathways for navigating to the landing site, and/or the like. In some embodiments, the landing site data 319 includes one or more databases of hospital with landing sites, emergency landing sites, vehicle facilities capable of battery management or other maintenance services, and/or the like. In some embodiments, the landing site data 319 includes weather reports associated with the landing site.

In some embodiments, communication data 321 includes contact information for communicating with an administrator of the landing site, a vehicle traffic administrator associated with a landing site, and/or the like. For example, communication data 321 may include phone numbers, radio frequencies or channels, platform usernames, and/or the like. In some embodiments, emergency service data 323 includes locations, contact information, protocols, and/or the like of emergency services including fire, ambulance, medical, security, vehicle maintenance, and/or the like. For example, emergency service data 323 may include a database of emergency services located within a predetermined range of or having a landing site. As another example, emergency service data 323 may include phone numbers, radio channels, and/or the like for communication with an emergency service. In another example, emergency service data 323 may include various protocols for responding to emergency scenarios including fire, system failure, communication failure, medical issue, security threat, and/or the like.

In some embodiments, bitstring data 123 includes bitstrings 121 and data associated therewith including segments 311, bit values 313, scores 315, and/or the like. In some embodiments, segments 311 include sequences of bit values within a bitstring 121. For example, a segment 311 may define which bits of a 32-bit bitstream are associated with a condition category of emergency information. In various embodiments, bit values 313 include binary information represented by a bit (e.g., sequences of binary code). In some embodiments, scores 315 includes decimal values represented by a sequence of bit values 313 within a segment 311. For example, scores may include 0, 1, 2, 3, and other decimal values. In this manner, a vehicle status 125 may be determined based at least in part on a score 315, the segment 311 from which the score 315 was generated, and the condition category 317 associated with the score 315.

In various embodiments, a priority ranking 127 is generated based at least in part on the vehicle statuses 125 of two or more vehicles 101 (e.g., vehicles requesting to land at the same landing site). In some embodiments, vehicle statuses 125 in the same condition category 317 are compared based on the associated scores. In some embodiments, such comparisons are initially performed respective to vehicle statuses 125 associated with the emergency. For example, a score of 0 in the emergency information category may indicate that no emergency conditions are present on a vehicle 101. When generating a priority ranking 127, a top-ranked entry of the ranking may be assigned to vehicles 101 associated with an emergency information score greater than 0. In some embodiments, where no vehicle 101 demonstrates an emergency information score greater then 0, comparison operations may be performed respective to additional condition categories 317. For example, a first vehicle 101 may be associated with a battery level score of 1 (e.g., 50-75% battery level) and a second vehicle 101 may be associated with a battery level score of 2 (e.g., 25-50% battery level. In response, the second vehicle 101 may be positioned higher in a priority ranking 127 relative to the first vehicle 101.

In some embodiments, in instances where two or more vehicles 101 comprise variant scores 315 across a plurality of condition categories, priority may be initially assigned based on the vehicle 101 demonstrating the greatest score in any condition category 317. In some embodiments, in instances in which the two or more vehicles 101 demonstrate matching scores across the condition categories 317, or a predetermined subset thereof, the priority ranking 127 may be generated based at least in part on the respective ETAs of the vehicles 101 to the landing site (e.g., the earlier ETA may be assigned greater priority).

In various embodiments, the priority ranking 127 is generated based at least in part on condition data 119B including vehicle traffic data 325, landing site data 319', environmental data 307', and/or the like. For example, the priority ranking 127 may be generated based at least in part on an availability or capacity of a landing site. In some embodiments, the availability or capacity of the landing site is determined based at least in part on vehicle traffic data 325, landing site data 319', and/or the like. In some embodiments, the vehicle traffic data 325 includes current and/or forecasted densities of vehicles 101 at or within a predetermined range of a landing site, and/or the like. In some embodiments, the landing site data 319' includes landing schedules, current landing instructions 129, and/or the like, that are in effect for a landing site. As another example, the priority ranking 127 may be generated based at least in part on a determination of whether a landing site comprises resources for responding to an indicated vehicle status (e.g., medical emergency, system failure, loss of communication, battery management, and/or the like). In some embodiments, a priority ranking 127 excludes vehicles 101 that are not capable of landing at the landing site based on ETA, lack of landing site capacity, lack of suitable emergency response resources at the landing site, and/or the like.

In various embodiments, one or more landing instructions 129 are generated based at least in part on one or more vehicle statuses 125, a priority ranking 127, and/or the like. A landing instruction 129 may indicate a sequence by which a first vehicle 101 may land at a landing site relative to other vehicles 101. Alternatively, a landing instruction 129 may indicate an alternative landing site for the vehicle 101. In some embodiments, a landing instruction 129 includes condition data 119 configured to provide emergency response resources to the vehicle 101. For example, in response the vehicle status 125 indicating a medical emergency, the landing instruction 129 may include one or more hospital locations comprising landing sites, one or more landing sites within a predetermined range of a hospital, hospital contact information, and/or the like. As another example, in response to the vehicle status 125 indicating a security threat, the landing instruction 129 may include security protocols, security service contact information, and/or the like. As another example, in response to the vehicle status 125 indicating a battery level of 0-25%, the landing instruction 129 may indicate a landing site comprising battery management capabilities, a minimal energy travel pathway to the landing site, and/or the like.

In some embodiments, a GUI 112 is generated and rendered on one or more displays to enable a user to access a landing instruction 129, emergency response resources, and/or the like. For example, a GUI 112 may be generated based at least in part on a landing instruction 129 including a position of the vehicle 101 within a priority ranking 127. The GUI 112 may be rendered on a display of a vehicle management system 107 to notify a vehicle operator of the order by which the vehicle 101 is approved to land at a landing site. As another example, the GUI 112 may include an alternative landing site, a travel pathway to the alternative landing site, and/or the like. As another example, the GUI 112 may include an emergency response interface including a plurality of landing site options for which the vehicle 101 is approved for landing. The emergency response interface may include landing site data, such as a current availability of the landing site, current weather at the landing site, available emergency or vehicle maintenance resources at the landing site, and/or the like. Additional examples of GUIs and emergency response interfaces are shown in FIGS. 9 and 10 and described herein. In some embodiments, vehicle statuses 125 are obtained based at least in part on user inputs to a GUI rendered on a display of a vehicle management system 107, ground station 140, and/or the like, after which the vehicle status 125 may be represented as a score 315, encoded into a bitstring 121, and broadcasted to the landing prioritization system 103 via an ADS-B system 105.

FIG. 4 illustrates an example dataflow 400 for vehicle status determination and landing prioritization. As shown, the landing prioritization system 103 may determine an order by which vehicles are prioritized for landing at a landing site, such as a vertiport, airport, and/or the like. For example, the landing prioritization system 103 may receive bitstrings from the ADS-B system of each vehicle 101 that is requesting to land at a landing site. The landing prioritization system 103 may determine respective vehicle statuses of the vehicles 101 based at least in part scores encoded by the bitstrings. For example, the landing prioritization system 103 may obtain a plurality of scores and compare the scores to associated condition categories to determine emergency information related to the vehicle or its occupants, battery level of the vehicle, weather encountered by the vehicle, vehicle classification, and ETA of the vehicle to the landing site (indicium 403).

In some embodiments, the landing prioritization system 103 obtains additional data from one or more databases, externals systems, and/or the like. For example, the landing prioritization system 103 may obtain, from an operator or administrator of the landing site, vehicle traffic information indicative of vehicle traffic density at or around a landing site (indicium 405). As another example, the landing prioritization system 103 may determine or obtain an availability status of the landing site, such as a number of vehicles currently at the landing site or a capacity of the landing site (indicium 407). As another example, the landing prioritization system 103 may determine one or more alternative landing sites that are within a predetermined range of the requested landing site, a predetermined range of the current position of a vehicle 101, and/or the like (indicium 409). As another example, the landing prioritization system 103 may obtain weather information from one or more weather reporting services (indicium 411).

In various embodiments, the landing prioritization system 103 generates a priority ranking of the vehicles 101 requesting to land at the landing site. The landing prioritization system 103 may provision the priority ranking to the vehicles 101 via one or more networks, such as a datalink (indicium 413). The landing prioritization system 103 may prioritize a subset of vehicles 101 that are emergency conditions, such as component failures, health events, low battery or low fuel, adverse weather, and/or the like. Additionally, alternatively, the landing prioritization system 103 determines landing priority based at least in part on respective ETAs of the vehicles 101. For example, the landing prioritization system 103 may assign a greater priority to vehicles 101 that are nearer or expected to arrive earlier to the landing site as compared to other vehicles 101.

In some embodiments, in response to determining that two vehicles 101 have identical statuses (e.g., both experiencing the same emergency, both demonstrating the same battery level, both encountering the same weather, and/or the like), the landing prioritization system 103 may order the vehicles 101 in the priority ranking based on the respective ETAs to the landing site. For example, the landing prioritization system 103 may receive respective bitstrings from a first vehicle 101 and a second vehicle 101. For each of the first vehicle 101 and the second vehicle 101, the landing prioritization system 103 may generate a set of scores in accordance with a plurality of condition categories (e.g., emergency, battery level, vehicle classification, and/or the like) and determine a vehicle status in accordance with the plurality of condition categories. Further, the landing prioritization system 103 may determine, based at least in part on the bitstring, a respective ETA of each vehicle to the landing site. In response to the first vehicle and the second vehicle demonstrating the same set of vehicle statuses, the landing prioritization system 103 may assign landing priority to the vehicle 101 that demonstrates a lower value of ETA.

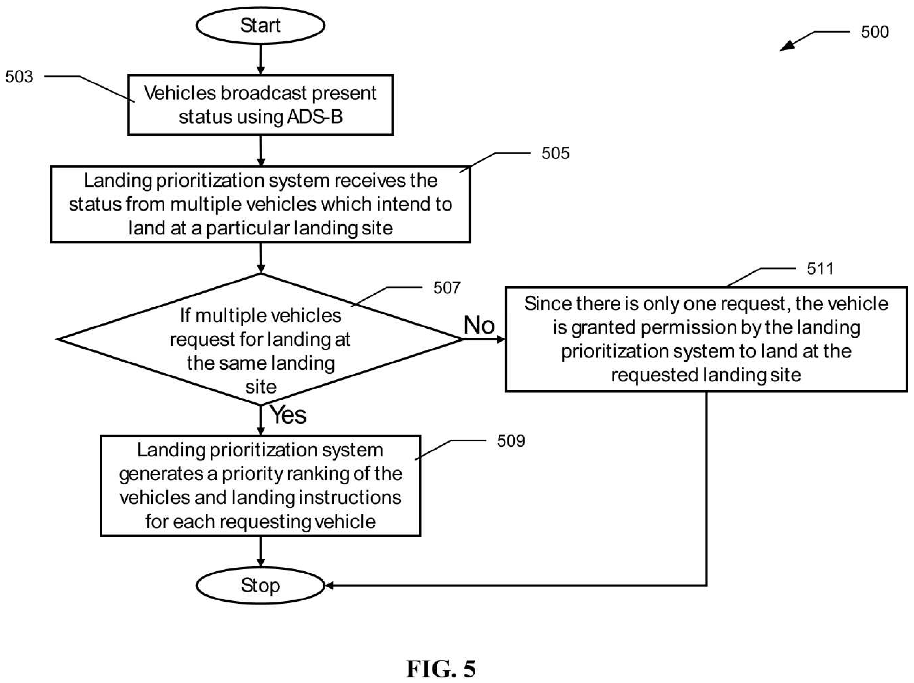

FIG. 5 shows an example workflow 500 for vehicle status determination and landing prioritization. In various embodiments, a plurality of vehicles 101 broadcast, via an ADS-B system 105, one or more bitstrings that have encoded therein a plurality scores in accordance with a plurality of condition categories (indicium 503). In some embodiments, the landing prioritization system 103 receives the bitstrings from the vehicles 101 (indicium 505) and determines whether one or more vehicles 101 are requesting to land at the same landing (indicium 507). In response to determining that multiple vehicles 101 are requesting to land at the same landing site (indicium 507: Yes), the landing prioritization system 103 may generate a priority ranking of the vehicles 101 based at least in part on the vehicle statuses associated with each vehicle 101 (indicium 509). In various embodiments, the landing prioritization system 103 generates respective landing instructions for each of the vehicles 101 based at least in part on the position of the vehicle 101 within the priority ranking (indicium 509). The landing prioritization system 103 may provision the respective landing instructions to the associated vehicles 101 to cause the vehicles 101 to land at the landing site in a sequence compliant with the priority ranking. In response to determining that multiple vehicles 101 are not requesting to land at the same site (or in response to receiving a request from a single vehicle 101), the landing prioritization system 103 may generate and provision to the vehicle 101 a landing instruction directing the vehicle 101 to land at the landing site.

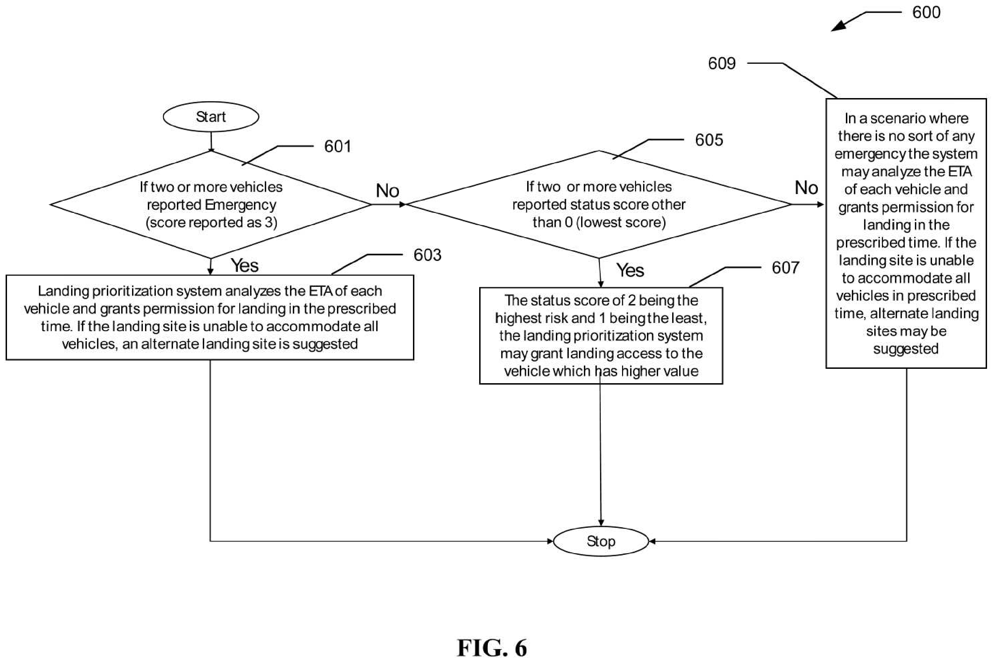

FIG. 6 shows an example workflow 600 for vehicle status determination and landing prioritization. In some embodiments, the landing prioritization system 103 determines that two or more vehicles 101 are requesting to land at the same landing site within a predetermined interval and, in response, generates a priority ranking of the vehicles 101 to control an order by which the vehicles 101 may land at the location. For example, the landing prioritization system 103 may determine that two or more vehicles 101 are associated with a greatest or most severe level of status in the condition category of "Emergency" based on the vehicles 101 signaling a maximum score for the condition category (indicium 601: Yes). In response to the determination, the landing prioritization system 103 may generate the priority ranking based at least in part on the ETAs of the vehicles 101. For example, in the priority ranking, the landing prioritization system 103 may assign a first vehicle 101 ahead of a second vehicle 101 based at least in part on an ETA of the first vehicle 101 being less than or earlier than an ETA of the second vehicle 101 (indicium 603). Additionally, or alternatively, in some embodiments, the landing prioritization system 103 may determine whether the landing site is capable of accommodating the quantity of vehicles 101 having matching vehicle statuses. For example, the landing prioritization system 103 may obtain a current availability or occupancy of the landing site and determine whether the number of requesting vehicles 101 exceeds the capacity or availability of the landing site. In response to determining that the landing site is unable to accommodate all of the requesting vehicles 101, the landing prioritization system 103 may determine one or more alternate landing sites to which a subset of the vehicles 101 may be assigned and instructed to land (indicium 603).

In various embodiments, in response to determining that the requesting vehicles 101 do not demonstrate matching scores and vehicle statuses in the Emergency condition category, the landing prioritization system 103 determines whether the vehicles 101 demonstrate differing scores and vehicle statuses pursuant another condition classification (indicium 605). In response to determining that difference in score and vehicle status exists (indicium 605: Yes), the landing prioritization system 103 may generate the priority ranking based at least in part on a determination of which vehicle 101 is associated with the greatest score in the one or more condition categories (indicium 607). For example, in accordance with a vehicle classification condition category, the landing prioritization system 103 may generate a first score of "0" for a first vehicle and a second score of "2" for a second vehicle 101. The landing prioritization system 103 may determine that, based on the first score, the first vehicle 101 is associated with a general passenger transport classification, such as a vehicle carrying four passengers. The landing prioritization system 103 may determine that, based on the second score, the second vehicle is associated with a surveillance vehicle classification, which may be prioritized over the general passenger transportation vehicle classification. The landing prioritization system 103 may generate a priority ranking based at least in part on the first score and second score. The priority ranking may order the second vehicle 101 ahead of the first vehicle 101, indicating that the second vehicle 101 is prioritized to land at the landing site before the first vehicle 101.

In some embodiments, in response to determining that no difference in score and vehicle status exists (indicium 605: No), the landing prioritization system 103 generates a priority ranking of the vehicles 101 based at least in part on respective ETAs of the vehicles 101 to the landing site (indicium 609). Additionally, or alternatively, the landing prioritization system 103 may determine that the landing site is unable to accommodate all requesting vehicles 101. In response to the determination, the landing prioritization system 103 may determine one or more alternate landing sites and generate and send to a subset of the vehicles 101 a landing instruction configured to cause the vehicles 101 to land at the alternative landing site.

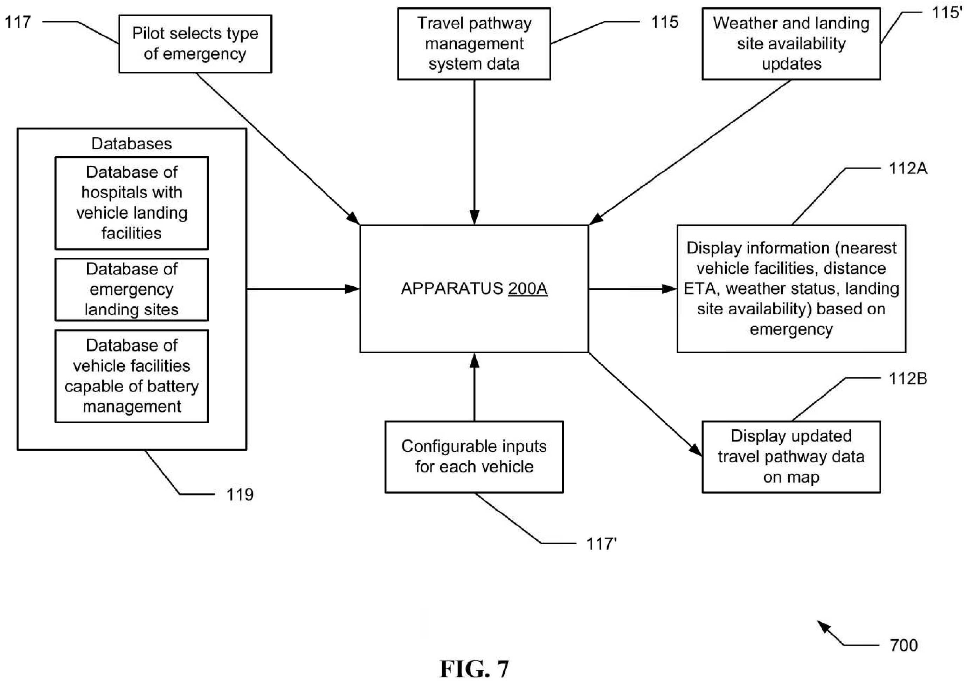

FIG. 7 shows an example dataflow 700 for rendering an emergency response interface on a display of a computing device. In various embodiments, the emergency response interface includes one or more GUIs 112, which may be rendered on displays such as display of a vehicle management system 107 or a display of a ground station 140. In some embodiments, the apparatus 200A of the vehicle 101 causes rendering of an emergency response interface in response to detecting that a vehicle is experiencing one or more emergency conditions (e.g., severe weather, system failure, adverse health event, security issue, loss of communication, and/or the like). In some embodiments, the apparatus 200A generates and causes rendering of an emergency response interface in response to receiving user input via one or more input devices. In doing so, the apparatus 200A may enhance emergency response efficiency by determining and providing to vehicle operators information and actions that may be relevant to mitigating the emergency scenario.

Existing approaches may rely upon lengthy communication with external entities to determine possible mitigation strategies for emergency situations. For example, in the event of a health emergency onboard an aerial vehicle, existing approaches may involve lengthy communication with Air Traffic Control (ATC) to determine the best course of action, such as the nearest medical facility. As a result, unnecessary delays may be introduced to emergency mitigation procedures. Further, reliance on external entities may result in lack of independent capability to diagnose and resolve emergency conditions. For example, in such approaches, loss of external communication capabilities may result in loss of access to critical information, such as identification of emergency response resources.

To overcome these challenges, and others, the present methods, apparatuses, and computer program products by enabling vehicle operators to locally access emergency response information and mitigation tools. In doing so, the methods, apparatuses, and computer program products may enhance independent emergency management capabilities. For example, the present techniques may augment computing resources of the vehicle operator to enable identification and exposure of emergency response resources without requiring communication with external entities. In various embodiments, the apparatus 200A is configured to determine a subset of emergency response resources that are applicable to a current emergency condition and cause output of the emergency response resources to a vehicle operator.

In some embodiments, the apparatus 200A receives one or more user inputs that are indicative of a vehicle status in accordance with a condition category (e.g., an emergency category, battery level category, and/or the like). For example, a vehicle operator may provide a selection to an input device in response to observing an emergency condition. The selection may may indicate a type or classification of the emergency, such as medical, battery failure, loss of communication, security threat, emergency landing, adverse weather, and/or the like. For example, the apparatus 200A may cause rendering of a first emergency response interface including selectable fields for different types or classifications of emergencies, and the user input may be a selection of one or more fields. In some embodiments, the apparatus 200A configures a set emergency conditions for selection by a vehicle operator based at least in part on the classification of the vehicle. In doing so, the apparatus 200A may enable different vehicles to be equipped with emergency response resources and handling capabilities that are most associated with the classification of the vehicle, which may optimize operational efficiency and safety. For example, a first vehicle classification may be associated with configurations for medical emergencies and battery failures, and a second vehicle classification may be associated with configurations for a broader set of protocols for medical emergencies, battery failures, communication loss, security issues, and/or the like.

In some embodiments, the apparatus 200A configures selectable fields and other emergency response interface elements in accordance with user-specified color schemes, spatial organizations, and/or the like to provide vehicle operators with customized interfaces. In doing so, the apparatus 200A may provide emergency user interfaces with improved clarity and intuitive visual feedback in accordance with operator preferences. Additionally, or alternatively, in some embodiments, the apparatus 200A may receive natural language inputs (e.g., text, audio, and/or the like) and determine, based on the natural language inputs, one or more emergency conditions occurring onboard the vehicle. For example, the apparatus 200A may perform natural language processing (NLP) techniques or other artificial intelligence and/or machine learning (AI/ML) techniques to predict an emergency condition based on natural language inputs.

In some embodiments, based on the vehicle status and associated condition category, the apparatus 200A determines emergency response resources to provide to the vehicle operator. For example, in response to receiving user input indicative of a medical emergency, the apparatus 200A may access condition data 119 including a database of hospitals with vehicle landing facilities and determine one or more hospitals that are nearest to a current location of the vehicle 101. Additionally, or alternatively, the apparatus 200A may access a database of emergency landing sites and determine one or more landing sites within a range of the vehicle 101. As another example, in response to receiving user input indicating a low battery or battery failure, the apparatus 200A may access a database of vehicle facilities capable of battery management. The apparatus 200A may determine one or more vehicle facilities and/or associated landing sites that are within a movement range of the vehicle 101.

In various embodiments, the apparatus 200A generates additional emergency response data including ETA of the vehicle 101 to possible landing sites, availability of a landing site to accommodate the vehicle 101, weather at or along a route to the landing site, and/or the like. For example, based at least in part on vehicle data 115 (e.g., travel pathway of the vehicle, current location of the vehicle, battery level, and/or the like), the apparatus 200A may determine a current travel range of the vehicle 101 and respective distances or ETAs between the vehicle 101 and one or more landing sites. The apparatus 200A may generate one or more travel pathways by which the vehicle 101 may traverse to a landing site. Additionally, the apparatus 200A may determine a current weather condition at the landing site and/or conditions along a travel pathway. The apparatus 200A may determine a current capacity or occupancy of the landing site. In some embodiments, to determine weather conditions, landing site availability, and/or the like, the apparatus 200A communicates with one or more external systems 160. For example, the apparatus 200A may periodically (or in response to user input) obtain from a weather service one or more weather reports. As another example, the apparatus 200A may periodically obtain from one or more landing site administrators a current availability or occupancy level at the landing site.

In some embodiments, the apparatus 200A generates one or more emergency response interfaces based at least in part on the emergency resources obtained. In some embodiments, the emergency response interface includes a GUI 112A configured to display the emergency response information, such as a listing of nearest vehicle facilities, hospitals, landing sites, and/or the like. In some embodiments, the GUI 112A includes respective distances, ETAs, weather conditions, landing availabilities, and/or the like for each landing site option. Additionally, or alternatively, in some embodiments, the apparatus 200A generates an emergency response interface including one or more navigational charts indicating travel pathways to the respective landing sites. For example, the apparatus 200A may generate and cause rendering of a GUI 112B including a mapping of one or more travel pathways for traversing from a current position of the vehicle 101 to a landing site. In some embodiments, the emergency response interface includes additional resources, such as contact information of emergency response entities, communication channels by which to resume communication with vehicle traffic administrators or other supporting systems, and/or the like.

Turning now to FIG. 8, shown is an example workflow 800 for generating an emergency response interface. In various embodiments, the workflow 800 is performed by the apparatus 200A, a ground station 140, and/or the like. In some embodiments, in response to occurrence of an emergency (indicium 801), a vehicle operator accesses a GUI including selectable fields for indicating a type or classification of the emergency (indicium 803). For example, the apparatus 200A may cause rendering of a first emergency response interface including selectable fields for emergency condition categories including medical emergency, battery failure, loss of communication, security threats, emergency landing, and/or the like. The apparatus 200A may receive, from a vehicle management system 107, a user input selecting one of the emergency condition categories. The apparatus 200A may obtain various emergency response resources based at least in part on the emergency condition category selected.

For example, in response to occurrence of a medical emergency, the apparatus 200A may retrieve hospital information from one or more databases and determine one or more hospitals within a predetermined range of the vehicle 101. The apparatus 200A may obtain or generate, for example, a name of the hospital, distance to the hospital, ETA to the hospital, current or forecasted weather at the hospital, availability of landing sites at or near the hospital, hospital contact information, and/or the like. As another example, in response to occurrence of a battery failure, the apparatus 200A may determine one or more vehicle facilities within a predetermined range of the vehicle 101. The apparatus 200A may further obtain or generate vehicle facility names, distances to the vehicle facilities, ETAs to the vehicle facilities, landing site availabilities, and contact information. As another example, in response to occurrence of a communication loss, the apparatus 200A may obtain one or more alternate communication frequencies, one or more ground stations 140 (or other control centers) within a predetermine range of the vehicle, emergency communication protocols, and/or the like.

As another example, in response to indication of a security threat, the apparatus 200A may obtain emergency contact information, identification of secure landing sites (e.g., including name, distance, ETA, weather, availability, and/or the like), onboard security protocols, panic button activation information, and/or the like. Additionally, the apparatus 200A may automatically initiate a panic button functionality onboard the vehicle 101, which may initiate automatic communication with external or internal authorities, prevent access of other vehicle occupants to vehicle controls, and/or the like. In another example, in response to a user input selecting emergency landing, the apparatus 200A may obtain one or more landing sites within a predetermined range of the vehicle 101 and which have availability for the vehicle 101. The apparatus 200A may further obtain weather statuses, contact information, landing procedures, and/or the like, which are associated with the landing sites.

In various embodiments, the apparatus 200A causes rendering of an emergency response interface including a listing of one or more landing sites determined to be within range of the vehicle 101 (indicium 805). For example, the apparatus 200A may cause rendering of a GUI 900 (FIG. 9) including a plurality of available landing sites and additional information, such as distance, ETA, name, availability, weather, approval status, travel pathway, and/or the like. In some embodiments, the apparatus 200A receives a user input selecting one of the landing sites (indicum 807). In response to the selection, the apparatus 200A may cause the vehicle 101 to navigate to the landing site in accordance with the associated travel pathway. For example, the apparatus 200A may cause rendering of the travel pathway to the landing site on one or more displays (indicium 809). In some embodiments, the apparatus 200A performs additional functionality including initiating communication between the vehicle 101 or ground station 140 and an administrator of the landing site, initiating communication between the vehicle 101 and one or more emergency services, and/or the like.

FIG. 9 shows an example GUI 900 that may be rendered on a computing device 901 in accordance with some embodiments described herein. In some embodiments, GUI 900 includes or embodies an emergency response interface that may be rendered in response to a vehicle status in an emergency condition category. For example, the apparatus 200A may receive a user input indicating occurrence of an emergency. In response, the apparatus 200A may obtain landing sites and other emergency response resources for mitigating the emergency, generate an emergency response interface based on the landing sites, and cause rendering of a GUI on a display of a vehicle management system 107, ground station 140, and/or the like. In doing so, the apparatus 200A may enable a vehicle operator to access and select a landing site, which may cause the apparatus 200A to display a travel pathway for the landing site and cause the vehicle 101 to move to the landing site in accordance with the travel pathway.

In various embodiments, the GUI 900 includes a plurality of landing sites 903 to which a vehicle 101 may be navigated. In some embodiments, the displayed landing sites 903 are selectable via user input. In some embodiments, the renderings of the landing sites 903 include a landing site name, ETA to the landing site, distance to the landing site, and/or the like. In some embodiments, the apparatus 200A causes the landing sites 903 to be rendered in one of a plurality of colors to indicate a current or forecasted weather condition at the landing site. For example, landing sites having good or fair weather may be rendered in green, landing sites having severe weather may be rendered in yellow, and landing sites having extreme weather (e.g., not suitable for landing) may be rendered in red. In various embodiments, in response to selection of a landing site 903, the apparatus 200A updates the GUI 900 (or another interface) to include a travel pathway for navigating the vehicle 101 to the landing site 903.

In some embodiments, the GUI 900 includes a landing site availability status 905, which may indicate a current occupancy or open capacity of the landing site. In some embodiments, the apparatus 200A causes rendering of the availability status 905 in one of a plurality of colors based on the occupancy or open capacity of the landing site. For example, landing sites having a low occupancy or high capacity may be displayed with an availability status 905 rendered in green, landing sites having a medium occupancy or capacity may be displayed with an availability status 905 rendered in yellow, and landing sites having a high occupancy or low to no capacity may be displayed with an availability status 905 rendered in red. In various embodiments, the GUI 900 includes selectable travel path fields 907 that, upon selection, cause the GUI 900 to be updated with a display of a travel pathway for navigating to the associated landing site 903. For example, in response to a user input selecting a procedure field 907 associated with "Vertiport 1," the apparatus 200A may update the GUI 900 to include a travel pathway including a plurality of waypoints for traversing to Vertiport 1.

Additionally, or alternatively, in some embodiments, the GUI 900 includes approval status indicators 909 configured to indicate whether the vehicle 101 is approved for traversing to the landing site, approved to land at the landing site, and/or the like. For example, an approval status indicator 909 may indicate whether a ground station 140 approves a vehicle to navigate to a landing site 903 in accordance with a travel pathway. Additionally, or alternatively, the GUI 900 may include an approval status indicator 909 that indicates whether a landing prioritization system 103 approves the vehicle 101 to land at the landing site. Additionally, or alternatively, in some embodiments, for a respective landing site 903, the GUI 900 includes a selectable field that, when selected, causes the apparatus 200A to send to the landing prioritization system 103, ground station 140, and/or the like, a request to land at the landing site 903. The apparatus 200A may render the approval status indicator 909 based at least in part on a response received from the landing prioritization system 103, ground station 140, and/or the like. In some embodiments, the approval status indicator 909 further includes a position of the vehicle 101 in a priority ranking of vehicles approved to land at the landing site 903.

In some embodiments, the GUI 900 includes selectable contact fields 911 for the respective landing sites 903. In various embodiments, in response to receiving a user input selecting a contact field 911, the apparatus 200A updates the GUI 900 (or another interface) to display contact information associated with initiating communication between the vehicle operator and an administrator of the landing site. Additionally, or alternatively, in some embodiments, in response to receiving a user input selecting a contact field 911, the apparatus 200A initiates communication between the vehicle 101, ground station 140, and/or the like, and the administrator of the landing site 903. Additionally, or alternatively, in some embodiments, in response to receiving a user input selecting a contact field 911, the apparatus 200A provisions to the landing prioritization system 103 a request to land at the landing site 903.

Turning now to FIG. 10, shown is an example GUI 1000 that may be rendered on a computing device 901 in accordance with some embodiments. In various embodiments, the apparatus 200A causes rendering of the GUI 1000 on a display of the vehicle management system 107, ground station 140, and/or the like. In some embodiments, the GUI 1000 enables a vehicle operator to provide a user input indicating an emergency occurring on a vehicle 101. The apparatus 200A may update the GUI 1000 to comprise an emergency response interface including emergency response resources associated with the indicated emergency. In some embodiments, the GUI 1000 includes a selection field 1001 configured to receive a user input selecting one of a plurality of condition categories, vehicle statuses, and/or the like. For example, the selection field 1001 may list medical, battery failure, loss of communication, security threats, emergency landing, and/or the like.

In various embodiments, in response to receiving a user input to the selection field 1001, the apparatus 200A generates and causes rendering of a secondary emergency response interface 1002 that is associated with the indicated emergency condition or vehicle status. For example, in response to a user input to the selection field 1001 indicating "battery failure," the apparatus 200A may cause rendering of a secondary emergency response interface 1002 including options for landing sites associated with vehicle facilities, such as maintenance centers. In some embodiments, the secondary emergency response interface includes detailed landing site information including distance, ETA, contact information, travel pathway waypoints, weather, availability, and/or the like. In some embodiments, the contact information includes phone numbers, usernames, radio channels, and/or the like, by which a vehicle operator may communicate with an administrator of a landing site, maintenance personnel, and/or the like. In various embodiments, in response to receiving a user input selecting a landing site, the apparatus 200A causes rendering of a travel pathway to the landing site. Additionally, or alternatively, in some embodiments, the apparatus 200A provisions one or more landing requests to the landing prioritization system 103, ground station 140, and/or the like, to obtain approval for landing at the landing site.

### Example Processes of the Disclosure

Having described example systems and apparatuses, data architectures, and dataflows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

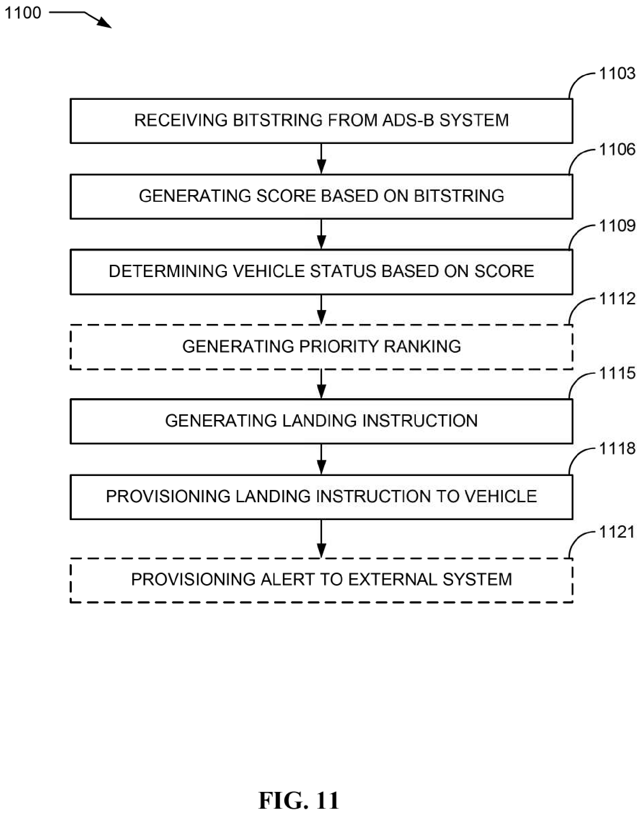

FIG. 11 illustrates a flowchart depicting operations of an example process 1100 for determining vehicle statuses in accordance with at least some example embodiments of the present disclosure. In some embodiments, the process 1100 is embodied by computer program code stored on a non-transitory computer-readable storage medium of a computer program product configured for execution to perform the process as depicted and described. Additionally, or alternatively, in some embodiments, the process 1100 is performed by one or more specially configured computing devices, such as an apparatus 200B alone or in communication with one or more other component(s), device(s), system(s), and/or the like. In this regard, in some such embodiments, the apparatus 200B is specially configured by computer-coded instructions (e.g., computer program instructions) stored thereon, for example in the memory 203 and/or another component depicted and/or described herein and/or otherwise accessible to the apparatus 200B, for performing the operations as depicted and described.

In some embodiments, the apparatus 200B is in communication with one or more internal or external apparatus(es), system(s), device(s), and/or the like, to perform one or more of the operations as depicted and described. For example, the apparatus 200 may communicate with one or more vehicles 101, vehicle management systems 107, ground stations 140, external systems 160, and/or the like to perform one or more operations of the process 1100.

At operation 1103, the apparatus 200B includes means such as the landing prioritization circuitry 211, the communications circuitry 205', the input/output circuitry 207', the processor 201', and/or the like, or a combination thereof, that receive a bitstring from an ADS-B system of a vehicle. For example, the apparatus 200B may receive from an ADS-B system 105 of a vehicle 101 one or more bitstrings. In various embodiments, the apparatus 200B receives bitstrings from multiple vehicles 101. In some embodiments, the apparatus 200B receives multiple bitstrings from a vehicle 101. In various embodiments, the apparatus 200B stores the bitstrings as bitstring data in memory 203', and/or the like. In some embodiments, the apparatus 200B stores the bitstring in association with a unique identifier for the vehicle 101 from which the bitstring was received. The apparatus 200B may include additional metadata, such as a timestamp at which the bitstring was received, a current position of the vehicle 101 (e.g., from a primary radar system, secondary radar system, transponder, and/or the like).

In various embodiments, the bitstring is based at least in part on user inputs, vehicle data, and/or the like obtained at the vehicle 101 or a ground station 140. For example, as shown in the dataflow 700, the workflow 800, and the GUIs 900 and 1000 and described herein, the apparatus 200A of the vehicle 101 may receive user inputs indicating occurrence of one or more vehicle statuses, such as onboard emergencies. As another example, the bitstring may be based at least in part on sensor readings, such as battery levels, weather sensors, component health sensors, physiological sensors, and/or the like. In some embodiments, the apparatus 200A generates and causes rendering of emergency response interfaces by which a vehicle operator may indicate vehicle statuses, access emergency response resources, request landing approval, and/or the like.

In some embodiments, the apparatus 200B receives additional bitstrings from ADS-B systems 105 of one or more additional vehicles 101. For example, the apparatus 200B may receive bitstrings from two or more vehicles 101 requesting to land at the same or different landing sites. In some embodiments, the bitstring includes a plurality of segments. For example, the bitstring may include 32 bits and a plurality of segments defined by subsets of the 32 bits. In various embodiments, respective segments may encode a score in accordance with one or more condition categories, and the score may represent a vehicle status in accordance with the condition category.

At operation 1106, the apparatus 200B includes means such as the landing prioritization circuitry 211, the communications circuitry 205', the input/output circuitry 207', the processor 201', and/or the like, or a combination thereof, that generate one or more scores based at least in part on the bitstring. For example, the apparatus 200B may generate one or more scores based at least in part on the bitstring and in accordance with one or more condition categories. In various embodiments, the apparatus 200B generates a plurality of scores in accordance different condition categories based at least in part on a plurality of segments of the bitstring. For example, based on different segments of a bitstring, the apparatus 200B may generate a respective score in accordance with condition categories including emergency information, weather, battery, vehicle classification, ETA, and/or the like. The condition categories may be allocated to different bits, for example, as indicated in Table 1.

Additionally, or alternatively, in some embodiments, the apparatus 200B receives a plurality of bitstrings from the ADS-B system 105 system of the first vehicle and determines, based on respective subsets of the plurality of bitstrings, a plurality of symbols, such as ASCII characters. In some embodiments, the apparatus 200B causes rendering of the plurality of symbols on one or more displays. For example, the apparatus 200B may generate one or more text strings based at least in part on the plurality of symbols and cause rendering of the one or more text strings on a display of ground station or another computing device. In some embodiments, the apparatus 200B determines, based at least in part on the plurality of symbols, a status of one or more components of the vehicle 101, one or more occupants of the vehicle 101, and/or the like. The one or more text strings rendered on the display may be based at least in part on the status. For example, the status may include a component identifier and a condition of the component, such as a fault state code or warning. As another example, the status may include a health condition associated with an occupant of the vehicle 101, an action performed by the occupant, and/or the like.

At operation 1109, the apparatus 200B includes means such as the landing prioritization circuitry 211, the communications circuitry 205', the input/output circuitry 207', the processor 201', and/or the like, or a combination thereof, that determine one or more vehicle statuses of the vehicle 101 based at least in part on the one or more scores. For example, apparatus 200B may determine a respective vehicle status of the vehicle 101 in accordance with one or more condition categories, such as emergency, battery level, weather, vehicle classification, ETA of the vehicle 101 to a landing site, and/or the like. In some embodiments, the condition category includes emergency information and, based at least in part on the score, the apparatus 200B determines that the vehicle 101 is experiencing or has experienced a system failure, a medical emergency, an extreme weather condition (or, alternatively, determines that the vehicle 101 is not experiencing an emergency). As another example, based at least in part on the score, the apparatus 200B may determine a current battery level or level range of the vehicle 101. As another example, the apparatus 200B may determine that a vehicle 101 is associated with a vehicle classification of surveillance and a battery level range of 25-50%.

In some embodiments, the apparatus 200B determines one or more statuses of multiple vehicles 101 based on respective bitstrings associated therewith. For example, the apparatus 200B may determine a battery level of a first vehicle 101 and a battery level of a second vehicle 101. As another example, the apparatus 200B may determine that a first vehicle 101 is experiencing severe weather and a second vehicle 101 is experiencing good weather or moderate weather. As another example, the apparatus 200B may determine that a first vehicle 101 is associated with a vehicle classification of privileged occupant, surveillance, or emergency, and a second vehicle 101 is associated with a vehicle classification of general transportation, such as transporting non-privileged passengers (e.g., non-VIPs, and/or the like). As another example, the apparatus 200B may generate respective ETAs of multiple vehicles 101 to a landing site.

At operation 1112, the apparatus 200B optionally includes means such as the landing prioritization circuitry 211, the communications circuitry 205', the input/output circuitry 207', the processor 201', and/or the like, or a combination thereof, that generate a priority ranking of a plurality of vehicles 101 based at least in part on respective vehicle statuses, scores, and/or the like. For example, the apparatus 200B may generate a priority ranking of a plurality of vehicles 101 to assign a highest landing priority to a subset of vehicles 101 associated with an emergency, a low battery, a privileged vehicle classification, bad or extreme weather, and/or the like. In some embodiments, in response to determining that two or more vehicles 101 are associated with the same scores in the emergency condition categories, the apparatus 200B determines the priority ranking based at least in part on the respective ETAs of the vehicles 101 to the landing site. In some embodiments, in response to determining that no vehicles 101 are associated with a vehicle status in the emergency condition category, the apparatus 200B determines the priority ranking based at least in part on the respective vehicle statuses of the vehicles in other condition categories, such as battery level, weather, vehicle classification, ETA, and/or the like. In various embodiments, in instances of matching vehicle statuses for all requesting vehicles 101, the apparatus 200B determines the priority ranking based on the ETAs of the vehicles 101.

For example, in response to determining that a first vehicle 101 is associated with an emergency condition and a second vehicle 101 is not associated with an emergency condition, the apparatus 200B may assign the first vehicle 101 ahead of the second vehicle 101 in a priority ranking. As another example, in response to determining that a first vehicle 101 is associated with an emergency condition and a second vehicle 101 is associated with an emergency condition, the apparatus 200B may generate the priority ranking further based at least in part on respective ETAs of the first vehicle 101 and the second vehicle 101 (e.g., the earlier ETA vehicle being assigned ahead of the later ETA vehicle). As another example, the apparatus 200B may assign, in the priority ranking, a first vehicle 101 ahead of a second vehicle 101 in response to determining that a battery level of the first vehicle 101 is less than a battery level of the second vehicle 101. In doing so, the apparatus 200B may cause the second vehicle 101 to land at the landing site after the first vehicle 101.

As another example, in response to determining that a first vehicle 101 is experiencing a severe weather condition and a second vehicle 101 is experiencing good weather or moderate weather, the apparatus 200B may assign the first vehicle 101 ahead of the second vehicle 101 in a priority ranking. In another example, in response to determining that a first vehicle 101 is associated with a vehicle classification of privileged occupant, surveillance, or ambulance, the apparatus 200B may assign the first vehicle 101 ahead of a second vehicle 101 that is associated with a vehicle classification of general transportation. As another example, in response to determining that a payload of a first vehicle 101 includes a privileged passenger or a patient passenger, the apparatus 200B may assign the first vehicle 101 ahead of a second vehicle 101 for which the payload includes non-privileged passengers, cargo, and/or the like.

At operation 1115, the apparatus 200B includes means such as the landing prioritization circuitry 211, the communications circuitry 205', the input/output circuitry 207', the processor 201', and/or the like, or a combination thereof, that generate one or more landing instructions. For example, the apparatus 200B may generate one or more landing instructions based at least in part on one or more vehicle statuses of one or more vehicles 101. In some embodiments, the apparatus 200 generates the landing instruction based at least in part on a priority ranking. For example, the apparatus 200B may generate a landing instruction configured to cause a first vehicle 101 to land at a landing site ahead of a second vehicle 101 in response to determining that the first vehicle 101 is experiencing an emergency condition, encountering more severe weather conditions compared to the second vehicle 101, has a battery level lower than the second vehicle 101, is associated with a higher vehicle classification than the second vehicle 101, has an earlier ETA compared to the second vehicle 101, and/or the like. Additionally, in some embodiments, the apparatus 200 generates one or more landing instructions based at least in part on one or more statuses of the landing site, such as landing capacity or occupancy, weather, availability of vehicle maintenance services, availability of emergency services, and/or the like. In some embodiments, the apparatus 200B provisions the landing priority to a plurality of vehicles 101 to cause the vehicles 101 to land at a landing site in an order pursuant to the priority ranking.

In some embodiments, the landing instructions include emergency response resources. For example, the landing instructions may include one or more nearest hospital locations that comprise a landing site. As another example, the landing instruction may include a nearest landing site location. As another example, the landing instruction may include contact information for emergency services, security services, vehicle maintenance services, and/or the like. As another example, the landing instruction may include a weather report associated with a landing site, a current availability of the landing site (e.g., occupancy, capacity, and/or the like), an alternative radio communication frequency, and/or the like.

At operation 1118, the apparatus 200B includes means such as the landing prioritization circuitry 211, the communications circuitry 205', the input/output circuitry 207', the processor 201', and/or the like, or a combination thereof, that provision a landing instruction to one or more vehicles 101. For example, the apparatus 200B may provision to a vehicle 101 a landing instruction to cause the vehicle 101 to navigate to the requested landing site or an alternative landing site in accordance with the landing instruction. In some embodiments, the apparatus 200B provisions to the vehicle 101 a landing instruction including a name of a landing site, geographic location of a landing site, priority ranking for landing at the landing site, and/or the like. In some embodiments, the landing instruction includes one or more emergency response resources, such as emergency response protocols, emergency contact information, availability of emergency services at the landing site, and/or the like. In some embodiments, the apparatus 200 provisions the landing instruction to the vehicle 101 via a communication gateway, such as a data link. Additionally, or alternatively, in some embodiments, the apparatus 200B provisions the landing instruction to a ground station 140 associated with the vehicle. In some embodiments, the apparatus 200B generates and provisions multiple landing instructions to multiple vehicles 101 to cause the vehicles 101 to land at a landing site in accordance with a priority ranking and/or cause one or more vehicles 101 to land at different landing sites.

In various embodiments, the apparatus 200A of the vehicle 101 causes generates and rendering of a GUI based at least in part on the landing instruction. For example, the apparatus 200A may cause rendering of a GUI comprising an indication of an approved landing site, a travel pathway to the landing site, current weather at the landing site, current availability of the landing site, contact information associated with the landing site, a priority ranking associated with the landing site, and/or the like. In various embodiments, the provision of the landing instruction to the vehicle 101 causes the vehicle 101 to move in accordance with the landing instruction. For example, receipt of the landing instruction may cause the apparatus 200A, the vehicle management system 107, the ground station 140, to land the vehicle 101 at one of a plurality of landing sites and land the vehicle 101 in accordance with a priority ranking.

At operation 1121, the apparatus 200B optionally includes means such as the landing prioritization circuitry 211, the communications circuitry 205', the input/output circuitry 207', the processor 201', and/or the like, or a combination thereof, that provision an alert to one or more external systems. For example, the apparatus 200B may provision an alert to one or external systems 160 to notify the external system 160 of one or more vehicle statuses, one or more landing instructions for the vehicle 101, a priority ranking for landing a plurality of vehicles at a landing site, and/or the like. In doing so, the apparatus 200B may enable advance notice of landing sequences, emergency response needs, and/or the like. In some embodiments, the apparatus 200B provisions an alert to one or more computing devices associated with an administrator of a landing site. For example, the apparatus 200B may provision to the administrator computing device an alert indicating that the vehicle 101 is approved to land at the landing site. The alert may include a distance of the vehicle 101 to the landing site, an ETA of the vehicle 101 to the landing site, one or more vehicle statuses communicated by the vehicle 101, and/or the like.

Additionally, or alternatively, in some embodiments, the apparatus 200B provisions an alert to one or more emergency service systems, maintenance systems, landing site systems, and/or the like. For example, in response to the apparatus 200B determining that the vehicle 101 is experiencing a system failure, battery failure, loss of communication and/or the like, the apparatus 200B may provision an alert to one or more vehicle facilities, vehicle maintenance services, and/or the like. As another example, in response to determining that the vehicle 101 is experiencing a medical emergency, the apparatus 200B may provision an alert to one or more hospital systems, ambulance services, and/or the like. As another example, in response to determining that the vehicle 101 is experiencing a security threat, the apparatus 200B may provision an alert to one or more law enforcement systems, security systems, and/or the like. As another example, in response to determining that the vehicle 101 is experiencing extreme weather, the apparatus 200B may provision an alert to a vehicle traffic administrator, a landing administrator, and/or the like to cause activation of landing assistance systems, such as lights, beacons, transponders, and/or the like.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
receiving a bitstring from an automatic dependent surveillance-broadcast (ADS-B) system of a first vehicle, wherein:
the bitstring is based on at least one input to a graphical user interface (GUI) on at least one computing device associated with an operator of the first vehicle;
generating, based at least in part on the bitstring, at least one score in accordance with at least one condition category;
determining, based at least in part on the at least one score, at least one status of the first vehicle in accordance with the at least one condition category;
generating a landing instruction for the first vehicle pursuant to a landing site based at least in part on the at least one status; and
provisioning the landing instruction to the at least one computing device to cause the first vehicle to move in accordance with the landing instruction.

2. The method of claim 1, further comprising:
obtaining at least one status of at least one additional vehicle in accordance with the at least one condition category, wherein:
the at least one status of the at least one additional vehicle is based at least in part on a bitstring obtained from an ADS-B system of the at least one additional vehicle;
generating, based at least in part on the at least one status of the first vehicle and the at least one status of the at least one additional vehicle, a priority ranking of the first vehicle and the at least one additional vehicle for landing at the landing site; and
generating the landing instruction for the first vehicle based at least in part on the priority ranking.

3. The method of claim 2, wherein:
the at least one condition category comprises at least one of emergency information, weather, battery level, vehicle classification, or estimated time of arrival (ETA).

4. The method of claim 3, wherein:
the at least one condition category comprises emergency information; and
the method further comprises:
in response to determining that, based at least in part on the at least one score, the first vehicle is experiencing at least one of a system failure, a medical emergency, or an extreme weather condition, assigning the first vehicle ahead of the at least one additional vehicle in the priority ranking; and
in accordance with the landing instruction and the priority ranking, causing the first vehicle to land at the landing site before the at least one additional vehicle.

5. The method of claim 3, wherein:
the at least one condition category comprises battery level; and
the method further comprises:
based at least in part on the at least one score and the at least one status of the at least one additional vehicle, determining that a respective battery level of the at least one additional vehicle is less than a battery level of the first vehicle;
in response to determining that the respective battery level of the at least one additional vehicle is less than the battery level of the first vehicle, assigning the at least one additional vehicle ahead of the first vehicle in the priority ranking; and
in accordance with the landing instruction and the priority ranking, causing the first vehicle to land at the landing site after a landing of the at least one additional vehicle at the landing site.

6. The method of claim 3, wherein:
the at least one condition category comprises weather; and
the method further comprises:
based at least in part on the at least one score, determining that the first vehicle is experiencing a severe weather condition;
in response to determining that the first vehicle is experiencing the severe weather condition, assigning the first vehicle ahead of the at least one additional vehicle in the priority ranking; and
in accordance with the landing instruction and the priority ranking, causing the first vehicle to land at the landing site before the at least one additional vehicle.

7. The method of claim 3, wherein:
the at least one condition category comprises vehicle classification; and
the method further comprises:
based at least in part on the at least one score, determining that a vehicle classification of the first vehicle is at least one of privileged occupant, surveillance, or ambulance;
assigning the first vehicle ahead of the at least one additional vehicle in the priority ranking based at least in part on the vehicle classification of the first vehicle; and
in accordance with the landing instruction and the priority ranking, causing the first vehicle to land at the landing site before the at least one additional vehicle.

8. The method of claim 2, wherein:
the at least one status of the first vehicle and the at least one status of the at least one additional vehicle are equivalent in the at least one condition category; and
the method further comprises:
generating, based at least in part on the bitstring from the first vehicle, a first ETA of the first vehicle to the landing site;
obtaining a second ETA of the at least one additional vehicle to the landing site, the second ETA being based at least in part on the bitstring from the ADS-B system of the at least one additional vehicle; and
generating the priority ranking further based at least in part on first ETA and the second ETA.

9. The method of claim 1, further comprising:
causing an update to the GUI based at least in part on the at least one input, wherein:
the updated GUI comprises at least one travel pathway and at least one of a nearest hospital location, a nearest landing site location, a radio communication frequency, a weather report, or an availability of a landing site.

10. An apparatus comprising at least one processor and at least one non-transitory memory having computer-coded instructions stored thereon that, in execution with at least one processor, cause the apparatus to:
receive a bitstring from an ADS-B system of a first vehicle, wherein:
the bitstring is based on at least one input to a GUI on at least one computing device associated with an operator of the first vehicle;
generate, based at least in part on the bitstring, at least one score in accordance with at least one condition category;
determine, based at least in part on the at least one score, at least one status of the first vehicle in accordance with the at least one condition category;
generate a landing instruction for the first vehicle pursuant to a landing site based at least in part on the at least one status; and
provision the landing instruction to the at least one computing device to cause the first vehicle to move in accordance with the landing instruction.

11. The apparatus of claim 10, wherein:
the at least one condition category comprises a first condition category and a second condition category; and
the computer-coded instructions, in execution with the at least one processor, further cause the apparatus to:
generate a first score based at least in part on a first segment of the bitstring and a second score based at least in part on a second segment of the bitstring;
determine a status of the first vehicle in the first condition category based at least in part on the first score and a status of the first vehicle in the second condition category based at least in part on the second score; and
generate the landing instruction based at least in part on the status of the first vehicle in the first condition category and the status of the first vehicle in the second condition category.

12. The apparatus of claim 11, wherein:
the computer-coded instructions, in execution with the at least one processor, further cause the apparatus to:
generate a third score based at least in part on a third subset of the bitstring;
determine an ETA of the first vehicle at the landing site based at least in part on the third score; and
generate the landing instruction further based at least in part on the ETA.

13. The apparatus of claim 10, wherein:
the computer-coded instructions, in execution with the at least one processor, further cause the apparatus to:
receive a plurality of bitstrings from the ADS-B system of the first vehicle;
determine, based on respective subsets of the plurality of bitstrings, a plurality of symbols; and
render, on a display of a second computing device, at least one text string based at least in part on the plurality of symbols.

14. The apparatus of claim 13, wherein:
the computer-coded instructions, in execution with the at least one processor, further cause the apparatus to:
determine, based at least in part on the plurality of symbols, a status of at least one of a component of the first vehicle or a passenger aboard the first vehicle; and
the at least one text string indicates the status of the at least one of a component of the first vehicle or a passenger aboard the first vehicle.

15. A computer program product comprising at least one non-transitory computer-readable storage medium having computer program code stored thereon that, in execution with at least one processor, is configured to:
receive a bitstring from an automatic dependent surveillance-broadcast ADS-B system of a first vehicle, wherein:
the bitstring is based on at least one input to a GUI on at least one computing device associated with an operator of the first vehicle;
generate, based at least in part on the bitstring, at least one score in accordance with at least one condition category;
determine, based at least in part on the at least one score, at least one status of the first vehicle in accordance with the at least one condition category;
generate a landing instruction for the first vehicle pursuant to a landing site based at least in part on the at least one status; and
provision the landing instruction to the at least one computing device to cause the first vehicle to move in accordance with the landing instruction.
